# EUROPEAN PATENT APPLICATION

(11) **EP 4 485 980 A1**
(43) Date of publication of application: **01.01.2025**
(21) Application number: 23777742.0
(22) Date of filing: 02.03.2023
(51) Int. Cl.: H04W 4/021

(54) **COMMUNICATION CONTROL METHOD AND COMMUNICATION APPARATUS**

(30) Priority: 26.03.2022 CN 202210308244; 06.05.2022 CN 202210485275
(71) Applicant: Huawei Technologies Co., Ltd., Shenzhen, Guangdong 518129 (CN)
(72) Inventor: SUN, Taoran, Shenzhen, Guangdong 518129 (CN); WU, Yizhuang, Shenzhen, Guangdong 518129 (CN)
(74) Representative: Grünecker Patent- und Rechtsanwälte PartG mbB
(86) International application number: PCT/CN2023/079210
(87) International publication number: WO 2023/185364

(57) **Abstract**

This application discloses a communication control method and a communication apparatus, to provide a technical solution for performing communication control on a terminal device based on relative location information between terminal devices, so as to improve precision and flexibility of performing communication control such as access control or service control on the terminal device. In the method, a first network element obtains control indication information for a first terminal device from a second network element, where the control indication information includes a device identifier of a second terminal device that has a location binding relationship with the first terminal device. The first network element obtains relative location information between the first terminal device and the second terminal device. The first network element performs communication control on the first terminal device based on the control indication information and the relative location information.

## Description

### CROSS-REFERENCE TO RELATED APPLICATIONS

This application claims priorities to Chinese Patent Application No. 202210485275.3, filed with the China National Intellectual Property Administration on May 6, 2022 and entitled "COMMUNICATION CONTROL METHOD AND COMMUNICATION APPARATUS", and to Chinese Patent Application No. 202210308244.0, filed with the China National Intellectual Property Administration on March 26, 2022 and entitled "COMMUNICATION CONTROL METHOD AND COMMUNICATION APPARATUS", both of which are incorporated herein by reference in their entireties.

### TECHNICAL FIELD

This application relates to the field of wireless communication technologies, and in particular, to a communication control method and a communication apparatus.

### BACKGROUND

With development and application of high-precision positioning technologies, the high-precision positioning technologies are needed in increasingly more scenarios to improve management and production efficiency. For example, a high-precision positioning system may be used to provide real-time high-precision location information, a navigation posture, speed information, precise time information, and the like for an uncrewed aerial vehicle. Alternatively, a high-precision positioning service may be used to implement autonomous driving, indoor navigation, or the like. In addition, with development of semiconductor technologies, terminal devices have increasingly more forms. Because different terminal devices have different functions and different application scenarios, in some scenarios, a relative distance between terminal devices becomes a consideration factor that cannot be ignored. For example, in some dangerous industrial devices, other devices are not allowed to work near these devices, to avoid communication interference. For another example, during inspection of an unmanned inspection vehicle, an inspection apparatus and a measurement apparatus on the vehicle are accurately installed on the unmanned vehicle, to ensure accuracy of measured data.

Currently, access control or service control on a terminal device cannot meet requirements of some current control scenarios. Therefore, how to improve precision and flexibility of the access control or the service control on the terminal device is worth studying.

### SUMMARY

A communication control method and a communication apparatus in embodiments of this application are used to provide a technical solution for performing communication control on a terminal device based on relative location information between terminal devices, so as to improve precision and flexibility of performing communication control such as access control or service control on the terminal device.

According to a first aspect, an embodiment of this application provides a communication control method. The method includes: A first network element obtains control indication information for a first terminal device from a second network element, where the control indication information includes a device identifier of a second terminal device that has a location binding relationship with the first terminal device; the first network element obtains relative location information between the first terminal device and the second terminal device; and the first network element performs communication control on the first terminal device based on the control indication information and the relative location information.

According to the method, when the first terminal device requests to perform communication by using the first network element, the first network element may perform communication control on the first terminal device based on the relative location information with the second terminal device that has the location binding relationship with the first terminal device. Compared with a related technology in which a core network device performs communication control on a terminal device based on absolute location information of the terminal device, the method provided in this application can improve precision and flexibility of performing communication control on the terminal device, meet more service requirements in a service scenario, and the like.

In a possible design, before the first network element obtains the control indication information for the first terminal device from the second network element, the method further includes: The first network element receives request information sent by the first terminal device, where the request information is used to request a service managed by the first network element or used to request to access a network served by the first network element. Based on this, that the first network element performs communication control on the first terminal device based on the control indication information and the relative location information may be implemented as follows: If it is determined that the relative location information meets a control condition included in the control indication information, allowing the first terminal device to use the service managed by the first network element or allowing the first terminal device to access the network served by the first network element; or may be implemented as follows: If it is determined that the relative location information does not meet a control condition included in the control indication information, skipping allowing the first terminal device to use the service managed by the first network element or skipping allowing the first terminal device to access the network served by the first network element. It should be noted that the first network element may serve one or more networks. It may be understood that, if the first network element does not allow the first terminal device to access a requested network, the first terminal device cannot access the network, but access of the first terminal device to another network served by the first network element is not affected. Alternatively, a network served by the first network element may include one or more slices. If the first network element includes a plurality of slices, the first terminal device may request to access one slice in the first network element. It may be understood that, if the first network element does not allow the first terminal device to access a requested slice, the first terminal device cannot access the slice, but access of the first terminal device to another slice served by the first network element is not affected.

In this design, the first network element can implement communication control on the first terminal device by determining, based on a relative location relationship between the first terminal device and the second terminal device, whether the relative location relationship meets the control condition included in the obtained control indication information, so that precision and flexibility of performing communication control on the terminal device can be improved, more service requirements in a service scenario are met, and the like. Therefore, the first network element may further obtain the control condition for the first terminal device from the control indication information, so as to implement communication control on the first terminal device based on the relative location information.

In a possible design, the control condition may include but is not limited to at least one of the following conditions: A relative distance between the first terminal device and the second terminal device is within a preset distance range; and a relative direction between the first terminal device and the second terminal device is within a preset direction range.

In this design, the first network element may configure an appropriate control condition based on an actual application scenario by determining at least one of the relative distance and the relative direction between the first terminal device and the second terminal device, to implement communication control on the first terminal device. Based on this, the communication control on the first terminal device can be implemented based on the relative location information and the control condition, thereby improving precision and flexibility of performing communication control on the terminal device.

In a possible design, the first network element is a session management network element. The allowing the first terminal device to use the service managed by the first network element includes: allowing the first terminal device to establish a session or activating a session. The skipping allowing the first terminal device to use the service managed by the first network element includes: skipping allowing the first terminal device to establish a session or deactivating a session.

In this design, the service managed by the first network element in a core network may be, for example, a session service. In this case, the first network element may be the session management network element or may have another name. In this scenario, the first network element may implement, based on a relative location relationship, control of requesting the session service by the first terminal device (in this case, the communication control may also be referred to as service control), so that precision and flexibility of performing service control on the first terminal device can be improved.

In a possible design, the first network element is the session management network element, and before the first network element performs communication control on the first terminal device, the first terminal device has established a session. If the established session is in an activated state, the skipping allowing the first terminal device to use the service managed by the first network element includes: releasing the session or deactivating the session. If the established session is in a deactivated state, the allowing the first terminal device to use the service managed by the first network element includes: activating the session.

In this design, in a scenario in which the first terminal device has established the session, the first network element may further subscribe to a change of the relative location information between the first terminal device and the second terminal device, and perform service control on the first terminal device based on latest relative location information, so that accuracy of the service control on the first terminal device can be improved, and real-time performance of the service control can be ensured.

In a possible design, if the communication control performed by the first network element on the first terminal device is deactivating the session, the method further includes: setting a deactivation time threshold. If timing reaches the activation time threshold, the first network element determines that the relative location information does not meet the control condition included in the control indication information, and releases the session; or If timing does not reach the activation time threshold, the first network element determines that the relative location information meets the control condition included in the control indication information, and activates the session.

In this design, when the communication control performed by the first network element on the first terminal device is that the first terminal device is not allowed, to improve efficiency of requesting, by the first terminal device, the service managed by the first network element again, the first network element may first establish a session and set the session to a deactivated state. Based on this, before the preset deactivation time threshold is reached, if the relative location information is updated to meet the control condition, the established session may be directly activated, thereby improving efficiency of controlling the first terminal device. In addition, if the deactivation time threshold is reached, but the relative location information still does not meet the control condition, the established session in the deactivated state may be released in time, to avoid long-time occupation of storage resources of the core network. In this way, for example, in a scenario in which the first terminal device and the second terminal device may frequently move, efficiency of establishing communication or restoring communication for the first terminal device can be improved.

In a possible design, the method further includes: If the releasing the session is securely releasing the session, the first network element sends first indication information to the first terminal device based on a secure release indication included in the control indication information. The first indication information indicates the first terminal device to securely release the session.

In this design, the established session of the terminal device is securely released, so that service processing continuity of the terminal device can be ensured, and sudden service interruption caused by session release can be avoided.

In a possible design, the method further includes: After the session is released, the first network element sends second indication information to the second terminal device based on a location sending indication included in the control indication information. The second indication information indicates absolute location information of the first terminal device.

In this design, the absolute location information of the first terminal device is sent to the second terminal device, so that timely exception check and the like can be implemented in some scenarios. For example, if the session of the first terminal device is released due to a deviation, the second terminal device is notified of the absolute location information of the first terminal device, and a skilled person may check the deviation of the first terminal device.

In a possible design, the first network element is an access and mobility management network element. The allowing the first terminal device to access the network served by the first network element includes: allowing the first terminal device to register with the network served by the first network element, or activating registration of the first terminal device with the network served by the first network element. The skipping allowing the first terminal device to access the network served by the first network element includes: skipping allowing the first terminal device to register with the network served by the first network element, or deactivating registration of the first terminal device with the network served by the first network element.

In this design, that the first terminal device requests to access the network served by the first network element may be requesting to register with and access the network. In addition, if the network includes a plurality of slices, the first terminal device may further request to register with and access one slice in the network. In this case, the first network element may be the access and mobility management network element or may have another name. In this scenario, the first network element may control, based on a relative location relationship, access of the first terminal device to the network (or the slice) (in this case, the communication control may also be referred to as access control), so that precision and flexibility of performing access control on the first terminal device can be improved.

In a possible design, the first network element is the access and mobility management network element, and before the first network element performs communication control on the first terminal device, the first terminal device has completed registration with the network served by the first network element. If the completed registration is in an activated state, the skipping allowing the first terminal device to access the network served by the first network element includes: deregistering the completed registration, or deactivating the completed registration. If the completed registration is in a deactivated state, the allowing the first terminal device to access the network served by the first network element includes: activating the completed registration.

In this design, in a scenario in which the first terminal device has completed registration with the network (or the slice), the first network element may further subscribe to a change of the relative location information between the first terminal device and the second terminal device, and perform access control on the first terminal device based on latest relative location information, so that accuracy of the access control on the first terminal device can be improved, and real-time performance of the service control can be ensured.

In a possible design, before the first network element obtains the relative location information between the first terminal device and the second terminal device, the method further includes: The first network element subscribes to the relative location information between the first terminal device and the second terminal device.

In this design, the first network element can implement communication control on the first terminal device in time by subscribing to a change of the relative location information between the first terminal device and the second terminal device, so that timeliness and accuracy of controlling the terminal device can be ensured.

In a possible design, the second network element is a unified data management network element, an application function entity network element, or a policy control function network element. Content of the control indication information is preconfigured in the second network element.

In this design, the content of the control indication information related to control on the terminal device based on the relative location information is preconfigured in a network element of the core network, so that flexibility of configuring the content of the control indication information can be improved, and precision and flexibility of performing communication control on the terminal device can be improved.

In a possible design, the control indication information is included in subscription information of the first terminal device, an extensible authentication protocol message, or a policy control message.

In a possible design, that the first network element obtains the relative location information between the first terminal device and the second terminal device includes but is not limited to the following manners: The first network element obtains first location information of the first terminal device and second location information of the second terminal device, and determines the relative location information based on the first location information and the second location information; or the first network element obtains the relative location information measured by the first terminal device or the relative location information measured by the second terminal device.

In this design, there may be a plurality of implementations for the first network element to obtain the relative location information. A specific implementation may be selected based on an actual scenario. The first network element may further implement communication control on the first terminal device by directly or indirectly obtaining the relative location information.

In a possible design, that the first network element obtains the relative location information between the first terminal device and the second terminal device includes: The first network element obtains the relative location information from a third network element. The method further includes: The first network element sends positioning request information to the third network element. The positioning request information is used to request the relative location information between the first terminal device and the second terminal device.

In a possible design, the positioning request information includes an identifier of the first terminal device, an identifier of the second terminal device, and indication information, and the indication information indicates to request the relative location information.

In a possible design, if the first network element obtains an identifier of an access and mobility management network element corresponding to the second terminal device from a unified data management network element, the positioning request information includes the identifier of the access and mobility management network element corresponding to the second terminal device. The identifier of the access and mobility management network element corresponding to the second terminal device is used to obtain the relative location information.

In a possible design, if the first network element is the session management network element, the third network element is a location management function network element or an access and mobility management network element. If the first network element is the access and mobility management network element, the third network element is the location management function network element.

In a possible design, the method further includes: The first network element sends, to the second terminal device, a control result of the communication control performed on the first terminal device. In this design, the second terminal device may be timely notified of the control result of the first network element on the first terminal device. Based on this, the second terminal device may also adjust, based on the control result, service interaction with the first terminal device, adjust processing of the second terminal device, or the like.

In a possible design, if the first terminal device is not allowed to use the service managed by the first network element or the first terminal device is not allowed to access the network served by the first network element, the method further includes: The first network element learns that secondary authentication of the first terminal device has been completed and succeeds, stores an authentication result of the secondary authentication and the control indication information, and sets a storage time threshold; and if timing reaches the storage time threshold, clearing the authentication result of the secondary authentication; or if timing does not reach the storage time threshold, and request information sent by the first terminal device again is received, determining, based on the authentication result of the secondary authentication, that the secondary authentication of the first terminal device has been completed.

In this design, the secondary authentication result is stored, so that when the first terminal device sends a request again, if the storage time threshold is not reached, secondary authentication does not need to be performed again, thereby reducing use of computing resources. In addition, through setting of the storage time threshold, long-time occupation of the storage resources of the core network can be further avoided.

According to a second aspect, an embodiment of this application provides a communication control method, including: A first terminal device reports location information of the first terminal device to an access network device. The location information of the first terminal device is used by a core network device to determine relative location information between the first terminal device and a second terminal device, and control the first terminal device based on the relative location information. The first terminal device and the second terminal device have a location binding relationship.

In a possible design, before the first terminal device reports the location information of the first terminal device to the access network device, the method further includes: The first terminal device sends request information to the access network device, where the request information is used to request to use a service managed by a network; and if the relative location information does not meet a condition for the first terminal device to use the service managed by the network, the first terminal device receives response information from the access network device, where the response information indicates that the service managed by the network is not allowed to be used.

In a possible design, the response message includes location information of the second terminal device.

According to a third aspect, an embodiment of this application provides a communication control method, including: A third network element receives positioning request information sent by a first network element, where the positioning request information is used to request relative location information between a first terminal device and a second terminal device; the third network element determines the relative location information between the first terminal device and the second terminal device; and the third network element sends the relative location information to the first network element.

In a possible design, that the third network element determines the relative location information between the first terminal device and the second terminal device and sends the relative location information to the first network element includes: The third network element obtains first location information of the first terminal device and second location information of the second terminal device, determines the relative location information based on the first location information and the second location information, and sends the relative location information to the first network element; or the third network element obtains first location information of the first terminal device and second location information of the second terminal device, and sends the first location information and the second location information to the first network element; or the third network element obtains the relative location information measured by the first terminal device or the relative location information measured by the second terminal device, and sends the relative location information measured by the first terminal device or the relative location information measured by the second terminal device to the first network element.

In a possible design, the positioning request information includes an identifier of the first terminal device, an identifier of the second terminal device, and indication information, and the indication information indicates to request the relative location information.

In a possible design, the first network element corresponds to the first terminal device. The positioning request information includes an identifier of an access and mobility management network element corresponding to the second terminal device, and that the third network element determines the relative location information between the first terminal device and the second terminal device includes: The third network element obtains the first location information via an access and mobility management network element corresponding to the first terminal device, obtains the second location information based on the identifier of the access and mobility management network element corresponding to the second terminal device, and determines the relative location information based on the first location information and the second location information; or the third network element obtains, via an access and mobility management network element corresponding to the first terminal device, the relative location information measured by the first terminal device; or the third network element obtains, based on the identifier of the access and mobility management network element corresponding to the second terminal device, the relative location information measured by the second terminal device.

According to a fourth aspect, an embodiment of this application provides a communication apparatus. The apparatus may have a function of implementing the first network element in any one of the first aspect or the possible designs of the first aspect, a function of implementing the terminal device in any one of the second aspect or the possible designs of the second aspect, or a function of implementing the third network element in any one of the third aspect or the possible designs of the third aspect. The apparatus may be a device, or may be a chip included in the device.

Functions of the foregoing communication apparatus may be implemented by hardware, or may be implemented by hardware executing corresponding software. The hardware or software includes one or more modules, units, or means (means) corresponding to the foregoing functions.

In a possible design, a structure of the apparatus includes a processing module and a transceiver module. The processing module is configured to support the apparatus in having the function of implementing the first network element in any one of the first aspect or the possible designs of the first aspect, the function of implementing the terminal device in any one of the second aspect or the possible designs of the second aspect, or the function of implementing the third network element in any one of the third aspect or the possible designs of the third aspect. The transceiver module is configured to support communication between the apparatus and another communication device. For example, when the apparatus is a terminal device, the apparatus may receive indication information from an access network device. The communication apparatus may further include a storage module. The storage module is coupled to the processing module, and stores program instructions and data that are necessary for the apparatus. In an example, the processing module may be a processor, the communication module may be a transceiver, and the storage module may be a memory. The memory may be integrated with the processor, or may be disposed separately from the processor.

In another possible design, a structure of the apparatus includes a processor, and may further include a memory. The processor is coupled to the memory, and may be configured to execute the computer program instructions stored in the memory, to enable the apparatus to perform the method in any one of the foregoing aspects or the possible designs of the aspects. Optionally, the apparatus further includes a communication interface, and the processor is coupled to the communication interface. When the apparatus is an access network device, the communication interface may be a transceiver or an input/output interface. When the apparatus is a chip included in the access network device, the communication interface may be an input/output interface of the chip. Optionally, the transceiver may be a transceiver circuit, and the input/output interface may be an input/output circuit.

According to a fifth aspect, an embodiment of this application provides a chip system, including: a processor. The processor is coupled to a memory, the memory is configured to store a program or instructions, and when the program or the instructions are executed by the processor, the chip system is enabled to implement the method in any one of the foregoing aspects or the possible designs of the aspects.

Optionally, the chip system further includes an interface circuit, and the interface circuit is configured to exchange code instructions to the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips.

According to a sixth aspect, an embodiment of this application provides a computer-readable storage medium. The computer-readable storage medium stores a computer program or instructions, and when the computer program or the instructions are executed, a computer is enabled to perform the method in any one of the foregoing aspects or the possible designs of the aspects.

According to a seventh aspect, an embodiment of this application provides a computer program product. When a computer reads and executes the computer program product, the computer is enabled to perform the method in any one of the foregoing aspects or the possible designs of the aspects.

According to an eighth aspect, an embodiment of this application further provides a communication system, including: a first network element, a second network element, and a third network element that are configured to perform the method according to any possible implementation of the first aspect.

For beneficial effects of any one of the second aspect to the eighth aspect, specifically refer to the beneficial effects in the possible designs of the first aspect. Details are not described herein again.

### BRIEF DESCRIPTION OF DRAWINGS

FIG. 1a is a diagram of a network architecture of a communication system to which this application is applicable;
FIG. 1b is a diagram of a network architecture of a (radio) access network device to which this application is applicable;
FIG. 2 is a diagram of a network architecture of a 5G communication system to which this application is applicable;
FIG. 3 shows an application scenario based on location information of a UE;
FIG. 4 is a schematic interaction flowchart of a communication control method according to an embodiment of this application;
FIG. 5a is a diagram 1 of a scenario of measuring relative location information according to an embodiment of this application;
FIG. 5b is a diagram 2 of a scenario of measuring relative location information according to an embodiment of this application;
FIG. 5c is a diagram 3 of a scenario of measuring relative location information according to an embodiment of this application;
FIG. 6A and FIG. 6B are a flowchart 1 of a communication control method according to an embodiment of this application;
FIG. 7 is a flowchart 2 of a communication control method according to an embodiment of this application;
FIG. 8A and FIG. 8B are a flowchart 3 of a communication control method according to an embodiment of this application;
FIG. 9 is a flowchart 4 of a communication control method according to an embodiment of this application; and
FIG. 10, FIG. 11, or FIG. 12 is a diagram of a structure of a communication apparatus according to an embodiment of this application.

### DESCRIPTION OF EMBODIMENTS

The following further describes in detail embodiments of this application with reference to accompanying drawings.

Technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, or a 5th generation (5th generation, 5G) mobile communication system or new radio (new radio, NR) system, or applied to a future communication system or another similar communication system.

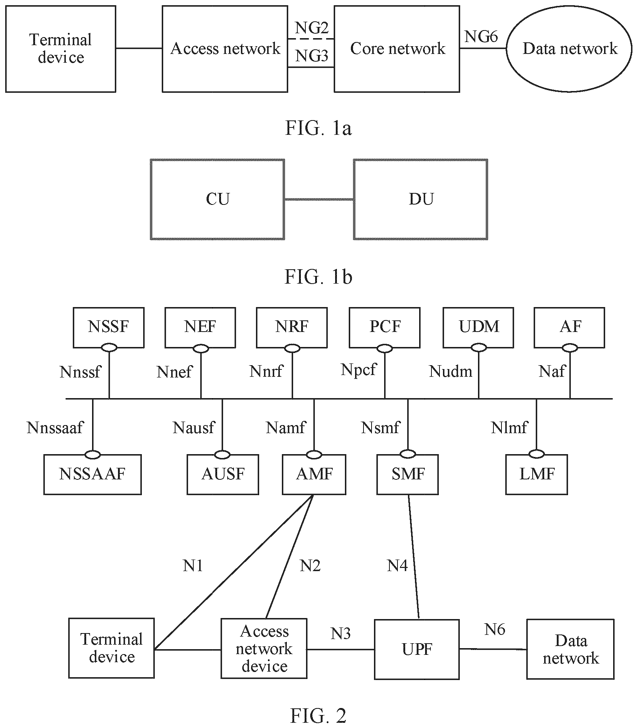

FIG. 1a is a diagram of a network architecture of a communication system to which this application is applicable. According to a requirement of a 3rd generation partnership project (3rd generation partnership project, 3GPP) protocol standard, the network architecture includes four components: a terminal device (user equipment, UE), an access network (access network, AN), a core network (core), and a data network (data network, DN). The access network may be a radio access network (radio access network, RAN).

The terminal device, the (radio) access network, and the core network are main parts of the network architecture, and may be logically divided into two parts: a user plane and a control plane. The control plane is responsible for mobile network management, and the user plane is responsible for service data transmission. For example, as shown in FIG. 1a, in a 5G communication system, a next generation (next generation, NG) 2 reference point is located between a (radio) access network control plane and a core network control plane, an NG 3 reference point is located between a (radio) access network user plane and a core network user plane, and an NG 6 reference point is located between the core network user plane and a data network.

The following describes each component of the network architecture in detail.
1. The terminal device is a device having a wireless transceiver function, and is an entry for a mobile user to interact with a network. The terminal device can provide a basic computing capability and a storage capability, display a service window to a user, and receive operation input from the user. The terminal device may communicate with the core network or the data network through the (radio) access network, and exchange voice and/or data with the (radio) access network. For example, in a 5G communication system, a next generation terminal device (NextGen UE, NG UE) may establish a signal connection and a data connection to the (radio) access network through a new radio (new radio, NR) technology, to perform transmission of a control signal and service data to the network.

For example, the terminal device may include a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may be a mobile phone (mobile phone), a tablet computer (Pad), a computer with a wireless transceiver function, a portable, pocket-sized, handheld, or computer built-in mobile apparatus, or the like. For another example, the terminal device may alternatively be a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a future-evolved public land mobile network (public land mobile network, PLMN), a vehicle device in V2X, a customer premises equipment (customer premises equipment, CPE), or the like. For example, the terminal device may alternatively be a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA).

By way of example but not limitation, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

The terminal device may be deployed on land, including being deployed indoor, outdoor, handheld, wearable, or in-vehicle; or may be deployed on a water surface (for example, on a ship); or may be deployed in the air (for example, on an airplane, a balloon, or a satellite). A specific technology, a device form, an application scenario, and a name that are used by the terminal device are not limited in embodiments of this application.

2. The (radio) access network is deployed near the terminal device, provides a network access function for an authorized user in a specific area, and can determine transmission tunnels of different quality based on a user level, a service requirement, and the like, to perform transmission of user data. The (radio) access network can manage and properly use resources of the (radio) access network, provide an access service for the terminal device as required, and is responsible for forwarding a control signal and service data between the terminal device and the core network.

A (radio) access network device is deployed in the (radio) access network, and is configured to connect the terminal device to a wireless network. The (radio) access network device may be generally connected to the core network through a wired link (for example, an optical fiber cable). The (radio) access network device may also be referred to as a RAN device/node, or a base station.

For example, the (radio) access network device may include a base station, an evolved NodeB (evolved NodeB, eNodeB) in an LTE system or an LTE-Advanced (LTE-Advanced, LTE-A) system, a next generation NodeB (next generation NodeB, gNB) in a 5G communication system, a transmission reception point (transmission reception point, TRP), a baseband unit (baseband unit, BBU), an access point (access point, AP) in a wireless local area network (wireless local area network, WLAN), an integrated access and backhaul (integrated access and backhaul, IAB) node, a base station in a future mobile communication system, an access node in a Wi-Fi system, or the like. The radio access network device may alternatively be a module or unit that implements some functions of the base station, for example, a central unit (central unit, CU) or a distributed unit (distributed unit, DU).

For example, in a network structure, the (radio) access network device may be a CU node, a DU node, or a (radio) access network device including the CU node and the DU node. FIG. 1b is a diagram of a network architecture of a (radio) access network device to which this application is applicable. The CU node is configured to support protocols such as a radio resource control (radio resource control, RRC) protocol, a packet data convergence protocol (packet data convergence protocol, PDCP), and a service data adaptation protocol (service data adaptation protocol, SDAP). The DU node is configured to support a radio link control (radio link control, RLC) layer protocol, a medium access control (medium access control, MAC) layer protocol, and a physical layer protocol.

The (radio) access network device may be deployed on land, including being deployed indoor, outdoor, handheld, wearable, or in-vehicle; or may be deployed on a water surface (for example, on a ship); or may be deployed in the air (for example, on an airplane, a balloon, or a satellite). A specific technology, a device form, an application scenario, and a name that are used by the (radio) access network device are not limited in embodiments of this application. In embodiments of this application, the (radio) access network device may be referred to as an access network (AN) device for short. Unless otherwise specified, all access network devices in the following may be (radio) access network devices.

3. The core network is responsible for maintaining subscription data of a mobile network, managing a network element of the mobile network, and providing functions such as session management, mobility management, policy management, and security authentication for the terminal device. Specific content includes: The core network provides network access authentication for the terminal device when the terminal device is attached; allocates a network resource to the terminal device when the terminal device has a service request; updates a network resource for the terminal device when the terminal device moves; provides a fast recovery mechanism for the terminal device when the terminal device is idle; releases a network resource for the terminal device when the terminal device detaches; and provides a data routing function for the terminal device when the terminal device has service data, for example, forwards uplink data to the data network, or receives downlink data from the data network and forwards downlink data to the (radio) access network, to send the downlink data to the terminal device.

4. The data network is configured to provide a service for a user. In an actual communication process, a client is usually located on the terminal device, and a server is usually located in the data network. The data network may be a private network, for example, a local area network, may be an external network that is not managed and controlled by an operator, for example, the Internet (Internet), or may be a dedicated network jointly deployed by operators, for example, a network that provides an IP multimedia network subsystem (IP multimedia core network subsystem, IMS) service.

FIG. 2 shows a more specific network architecture to which an embodiment of this application is applicable. The network architecture may be a network architecture of a 5G communication system. As shown in FIG. 2, the network architecture includes a terminal device, an access network device, various types of core network elements/functional entities, and a data network.

A core network user plane includes a user plane function (user plane function, UPF). A core network control plane includes but is not limited to: an access and mobility management function (access and mobility management function, AMF) network element, a session management function (session management function, SMF) network element, an authentication server function (authentication server function, AUSF) network element, a network slice selection function (network slice selection function, NSSF) network element, a network exposure function (network exposure function, NEF) network element, a network function repository function (network function repository function, NRF) network element, a policy control function (policy control function, PCF) network element, a unified data management (unified data management, UDM) network element, an application function (application function, AF) network element, a location management function (location management function, LMF) network element, and a network slice authentication and authorization function (network slice specific authentication and authorization function, NSSAAF) network element.

Specifically, the AMF network element is mainly responsible for access management and mobility management of the terminal device, for example, responsible for status maintenance of the terminal device, reachability management of the terminal device, forwarding of a mobility management non-access-stratum (mobility management non-access-stratum, MM NAS) message, and forwarding of a session management (session management, SM) N2 message.

The SMF network element is mainly responsible for session management in a mobile network, including establishing a session for the terminal device, and allocating and releasing a resource for the session. The resource includes session quality of service (quality of service, QoS), a session path, a forwarding rule, and the like. For example, the SMF network element is responsible for allocating an internet protocol (internet protocol, IP) address to the terminal device or selecting a UPF network element that provides a packet forwarding function.

The UPF network element is mainly responsible for connecting to an external network, and forwarding a user data packet according to a routing rule of the SMF, for example, sending uplink data to the data network or another UPF network element, and sending downlink data to another UPF network element or the access network device.

The AUSF network element is mainly responsible for performing security authentication on the terminal device.

The NSSF network element is mainly responsible for selecting an appropriate network slice for a service of the terminal device.

The NEF network element exposes some functions of a network to an application in a controlled manner.

The NRF network element is responsible for providing functions of storing and selecting network functional entity information for another network element.

The PCF network element is mainly responsible for user policy management, including policy authorization, quality of service, and generation of a charging rule, and delivering a corresponding rule to the UPF network element via the SMF network element, to complete installation of the corresponding policy and rule.

The UDM network element is mainly responsible for managing user data, including subscription information, a context, policy information, and the like. It should be noted that although not shown in FIG. 2, the network architecture shown in FIG. 2 may further include a unified data repository (unified data repository, UDR) network element. A function of the UDM network element may be implemented by interacting with the UDR network element. The UDR network element is configured to store data needed when the UDM network element performs an operation of the UDR network element. The UDM network element is configured to interact with another network element. During actual implementation, the UDM network element and the UDR network element may be two independent physical entities, or the UDR network element may be integrated into the UDM network element. This is not limited.

The AF network element is mainly responsible for providing service data of various applications for a control plane network element in a communication network of an operator, or obtaining data information and control indication information of the network from the control plane network element in the communication network.

The LMF network element is mainly responsible for managing a positioning request and allocating a positioning resource in a positioning service.

The NSSAAF network element is mainly responsible for authentication and authorization of a network slice, and may interact with an authentication, authorization, and accounting server (authentication, authorization, and accounting server, AAA-S) through an authentication, authorization, and accounting proxy (authentication, authorization, and accounting proxy, AAA-P).

In an example, in the network architecture shown in FIG. 2, an interface between the terminal device and the AMF network element is referred to as an N1 interface, an interface between the access network device and the AMF network element is referred to as an N2 interface, an interface between the access network device and the UPF network element is referred to as an N3 interface, an interface between the UPF network element and the SMF network element may be referred to as an N4 interface, and an interface between the UPF network element and the data network is referred to as an N6 interface. Certainly, in a future communication system, names of these interfaces may be unchanged, or may be replaced with other names. This is not limited in this application.

In the future communication system, for example, a 6th generation (6th generation, 6G) communication system, the foregoing network element or device may still use a name of the network element or device in a 4th generation (4th generation, 4G) or 5G communication system, or have another name. A function of the network element or the device may be completed by one independent network element, or may be jointly completed by several network elements. This is not limited in embodiments of this application.

During actual deployment, the network elements may be co-located. For example, the access and mobility management function network element may be co-located with the session management function network element. The session management function network element may be co-located with the user plane function network element. When two network elements are co-located, interaction between the two network elements provided in embodiments of this application becomes an internal operation of the co-located network element or may be omitted.

It should be noted that, the core network control plane may use a service-oriented architecture, each control plane network element is connected to a service bus, and interaction between control plane network elements is performed in a service invoking manner, to replace a point-to-point communication manner in a conventional core network architecture. In the service-oriented architecture, the control plane network element opens a service to another control plane network element for invoking by the another control plane network element. In point-to-point communication, a set of specific messages exists in a communication interface between the control plane network elements, and can be used only by control plane network elements at two ends of the interface during communication.

It should be noted that the various possible network elements/functional entities in the network architecture may be network elements in a hardware device, may be software functions running on dedicated hardware, or may be virtualized functions instantiated on a platform (for example, a cloud platform). Optionally, the network elements or functional entities may be implemented by one device, may be jointly implemented by a plurality of devices, or may be implemented by different functional modules in one device. This is not specifically limited in embodiments of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the communication system architecture and emergence of new service scenarios, the technical solutions provided in embodiments of this application are also applicable to similar technical problems.

The terms "system" and "network" may be used interchangeably in embodiments of this application. "A plurality of" means two or more. In view of this, "a plurality of" may also be understood as "at least two" in embodiments of this application. "At least one" may be understood as one or more, for example, one, two, or more. For example, including at least one means including one, two, or more, and there is no limitation on which is included. For example, if at least one of A, B, and C is included, A, B, C, A and B, A and C, B and C, or A, B, and C may be included. Similarly, understandings of descriptions such as "at least one" are also similar to this. The expression "at least one of the following items (pieces)" or a similar expression means any combination of these items, including a single item (piece) or any combination of a plurality of items (pieces). For example, "at least one of A, B, and C" includes A, B, C, AB, AC, BC, or ABC. The term "and/or" describes an association relationship for describing associated objects and represents that three relationships may exist. For example, A and/or B may represent the following three cases: Only A exists, both A and B exist, and only B exists. In addition, the character "/", unless otherwise specified, generally indicates an "or" relationship between the associated objects.

Unless otherwise specified, ordinal numbers such as "first" and "second" mentioned in embodiments of this application are used to distinguish a plurality of objects, and are not used to limit a sequence, a time sequence, a priority, or an importance degree of the plurality of objects. In addition, descriptions of "first" and "second" do not mean that objects are necessarily different.

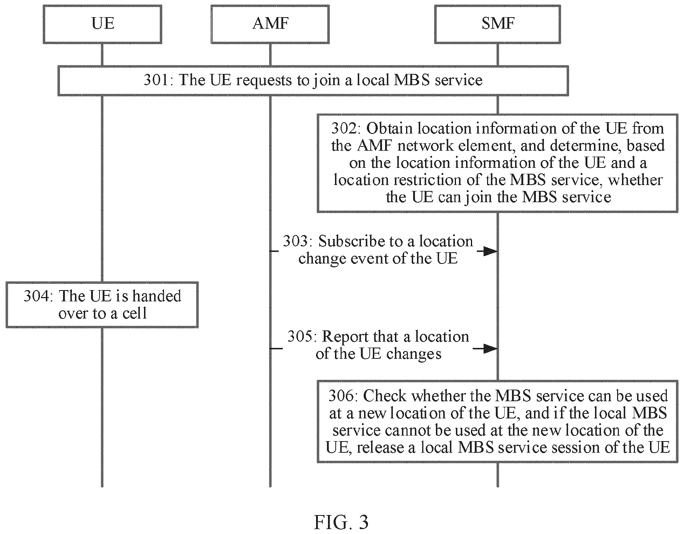

With reference to the content described in the background, the high-precision positioning technology is applied to increasingly more scenarios. Therefore, obtaining high-precision location information of the terminal device plays an increasingly important role. FIG. 3 shows an application scenario based on location information of a UE. A UE may request to use a multicast broadcast service (multicast broadcast service, MBS). An SMF network element may control, based on the request of the UE, absolute location information of the UE, and a location restriction of the MBS service, whether to allow the UE to use the MBS service. For example, the application scenario shown in FIG. 3 may include the following procedure.

Step 301: A UE requests, from a core network, to join a local MBS service.

Step 302: An SMF network element obtains location information of the UE from an AMF network element, and determines, based on the location information of the UE and a location restriction of the MBS service, whether the UE can join the MBS service.

Step 303: After the UE successfully joins the MBS service, the SMF network element subscribes to a location change event of the UE from the AMF network element.

Step 304: The UE moves, and is handed over to another cell (Cell).

Step 305: After discovering that the UE is handed over, the AMF network element reports, to the SMF network element, that a location of the UE changes.

Step 306: The SMF network element checks whether the MBS service can be used at a new location of the UE, and if the local MBS service cannot be used at the new location of the UE, the SMF network element releases a local MBS service session of the UE.

The location restriction of the MBS service may be, for example, a mobility restriction (mobility restriction) parameter. The mobility restriction parameter may include parameters in the following Table 1.

**Table 1**

| Parameter | Control granularity | Execution network element | Function |
|---|---|---|---|
| Forbidden area (forbidden area) | Tracking area (tracking area, TA) | The parameter is sent to the UE in a registration or UE configuration update (UE configuration update, UCU) procedure; the UE performs control; and the AMF network element and a RAN also perform control. | Any communication behavior of the UE is forbidden. |
| Service area restriction (service area restriction) | TA | The parameter is sent to the UE in a registration or UCU procedure; the UE performs control; and the AMF network element and a RAN make a reference to the parameter when the UE is handed over and establishes a session. | UE activation or establishment of a 3GPP user-plane connection is forbidden. |
| Radio access technology (radio access technology, RAT) restriction (restriction) | RAT | Control is performed by the AMF network element; and the parameter is not sent to the UE. | The UE is forbidden to perform access by using a RAT type. |
| Core network type restriction (core network type restriction) | 5GC/Evolved packet core (evolved packet core, EPC) network | The parameter is sent to the UE in a registration or UCU procedure; the UE performs control; and the AMF network element and the RAN also perform control. | The UE is forbidden to access the 5GC/EPC. |

According to the foregoing content, in the related technology, access control performed by the core network on the UE is generally performed based on absolute location information of a terminal device. However, this control manner cannot meet requirements of some current control scenarios.

In view of this, embodiments of this application provide a communication control method. In the method, a network element in a core network may perform communication control on a UE based on a relative location relationship between the UE and another UE that has a location binding relationship with the UE, so that precision and flexibility of performing the communication control on the UE can be improved, and service requirements in more application scenarios can be met.

The following describes in detail a communication control method provided in embodiments of this application. It should be noted that, in the following embodiments, an example in which a network element in a core network performs communication control on a first terminal device is used. For an implementation process of performing communication control on a second terminal device, refer to a process of performing the communication control on the first terminal device. In addition, the network element in the core network may perform the communication control on the first terminal device, the communication control on the second terminal device, or the communication control on the first terminal device and the second terminal device based on a relative location relationship between the first terminal device and the second terminal device. This is not limited in this application.

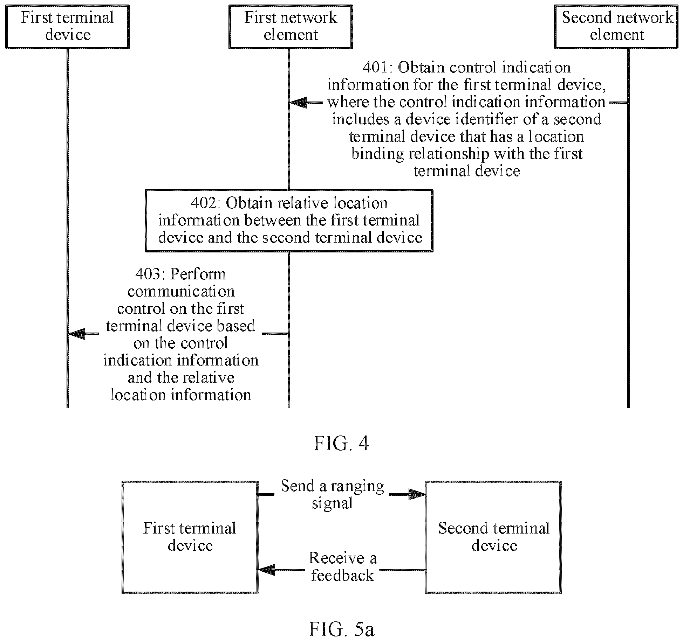

FIG. 4 is a schematic interaction flowchart of a communication control method according to an embodiment of this application. The procedure may include the following steps.

S401: A first network element obtains control indication information for a first terminal device from a second network element, where the control indication information includes a device identifier of a second terminal device that has a location binding relationship with the first terminal device.

In a possible triggering scenario, if receiving request information sent by the first terminal device, the first network element may obtain the control indication information for the first terminal device from the first network element or the second network element based on the request information. The request information may be used to request a service managed by the first network element or may be used to request to access a network served by the first network element. For example, the first network element may be an AMF network element or an SMF network element. On this basis, the request information sent by the first terminal device may be a session establishment request sent by a UE to the AMF network element for starting a PDU session establishment procedure after UE registration. In this way, the AMF network element or the SMF network element (if the AMF network element sends the session establishment request to the SMF network element) may obtain subscription information of the UE from a UDM network element based on request information of the UE, may obtain an extensible authentication protocol (extensible authentication protocol, EAP) message from an AF network element, or may obtain a policy control message from a PCF network element. It may be understood that the control indication information may be carried in the subscription information of the UE, the EAP message, or the policy control message, or may be carried in another message. This is not limited in this application.

The control indication information may be preconfigured in the second network element. In the foregoing example, the second network element may be the UDM network element, the AF network element, or the PCF network element. In addition, the second network element may alternatively be the first network element. In other words, the second network element may alternatively be the AMF network element or the SMF network element. In this case, the control indication information may be prestored in the first network element, and the first network element may obtain the control indication information for the first terminal device from the first network element. It may be understood that the second network element may alternatively be another network element, for example, any extended network element or functional entity that can store the control indication information in a future communication system. This is not limited in this application.

It may be understood that the second terminal device that has the location binding relationship with the first terminal device may alternatively be preconfigured in the second network element. For example, the first terminal device and the second terminal device that have the location binding relationship may be but are not limited to terminal devices in the following scenarios.

Scenario 1: The location binding relationship between the first terminal device and the second terminal device may be that when a relative location between the two terminal devices is close, a better communication effect can be achieved.

For example, the first terminal device may be a smart lock, and the second terminal device may be a terminal device for smart unlocking (for example, a mobile phone or a band). To ensure security, a condition for controlling the smart lock to be unlocked is that when the smart lock is close to the terminal device for smart unlocking, the smart lock is allowed to be unlocked. In this way, when the first network element performs communication control on the smart lock, if the first network element obtains a device identifier of the terminal device for smart unlocking, the first network element may implement the communication control on the smart lock based on a relative location relationship between the smart lock and the terminal device for smart unlocking. This can improve unlocking security of the smart lock.

For another example, during inspection of an unmanned inspection vehicle, an inspection apparatus and a measurement apparatus on the vehicle are accurately installed on the unmanned vehicle, to ensure accuracy of measured data. In this scenario, the first terminal device may be the inspection apparatus and the measurement apparatus on the vehicle, and the second terminal device may be the unmanned inspection vehicle. The first network element may implement communication control on the inspection apparatus and the measurement apparatus on the vehicle based on relative location information between the inspection apparatus and the measurement apparatus on the vehicle and the unmanned inspection vehicle. For example, if it is identified, based on the relative location information, that the inspection apparatus and the measurement apparatus are not on the unmanned inspection vehicle, the inspection apparatus and the measurement apparatus may be controlled to no longer perform measurement, and a skilled person is notified that the inspection apparatus and the measurement apparatus fall from the unmanned inspection vehicle.

Scenario 2: The location binding relationship between the first terminal device and the second terminal device is that when relative location between the two terminal devices is close, communication interference, a security risk, or the like is generated. Alternatively, when a relative location relationship between the two terminal devices is not close, a better communication effect can be achieved or a security risk can be avoided.

For example, in some dangerous industrial devices, other devices are not allowed to work near these devices, to avoid communication interference. In this scenario, the second terminal device may be a dangerous industrial device, and the first terminal device may be another device that may exist in a same working area as the dangerous industrial device. In this way, when the first network element performs communication control on the another device, if the first network element obtains a device identifier of the dangerous industrial device, the first network element may implement the communication control on the another device based on a relative location relationship between the another device and the dangerous industrial device. This can ensure working security of the dangerous industrial device.

It should be noted that the foregoing scenarios are merely examples shown in this application. During specific implementation, the location binding relationship between the first terminal device and the second terminal device may further include another scenario. For example, a location binding relationship in which the first terminal device and the second terminal device are excessively close, excessively far, or the like is not suitable for the first terminal device and the second terminal device. During specific implementation, the location binding relationship may be set based on an implementation scenario.

In this embodiment of this application, the device identifier of the second terminal device may be represented in but is not limited to any one of the following forms: a subscription permanent identifier (subscription permanent identifier, SUPI), an IP address, a media access control address (media access control address, MAC), and a customized identifier.

**S402: The first network element obtains the relative location information between the first terminal device and the second terminal device.** The first network element obtains, from the control indication information, the device identifier of the second terminal device that has the location binding relationship with the first terminal device, and may determine that communication control on the first terminal device needs to be implemented based on the relative location information between the first terminal device and the second terminal device. Therefore, before performing the communication control on the first terminal device, the first network element may obtain the relative location information.

In an optional implementation, the first network element may separately obtain first location information of the first terminal device and second location information of the second terminal device, and then determine the relative location information based on the first location information and the second location information. For example, the AMF network element may measure absolute location information of the first terminal device and absolute location information of the second terminal device, or an LMF network element may measure absolute location information of the first terminal device and absolute location information of the second terminal device. The first network element may obtain the absolute location information of the first terminal device and the absolute location information of the second terminal device from the AMF network element or the LMF network element, and then obtain the relative location information through calculation. It should be noted that a manner of measuring the absolute location information is not limited in this application. The location information may be represented in a form of longitude and latitude or a horizontal height, or may be represented in another possible form. This is not limited in this application.

In another optional implementation, the first network element may alternatively obtain the relative location information measured by the first terminal device or the relative location information measured by the second terminal device.

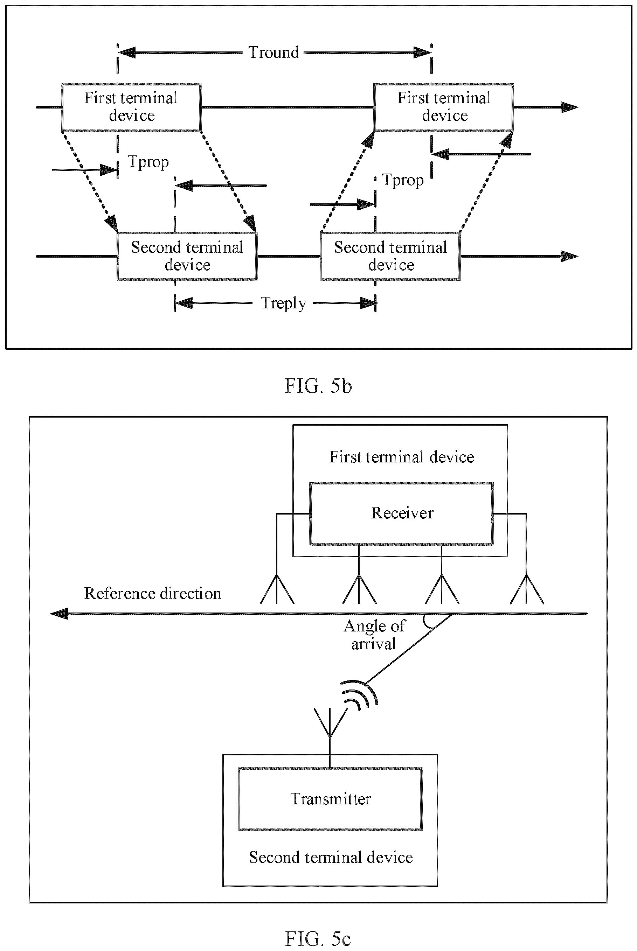

For example, an example in which the first terminal device measures the relative location information is used. FIG. 5a is a diagram of a scenario of measuring relative location information according to an embodiment of this application. In this case, the relative location information may be represented as a relative distance. The first terminal device may receive an indication of an access network device, and start a procedure of measuring the relative location information. During implementation, the first terminal device may send a ranging signal to the second terminal device. After receiving the ranging signal, the second terminal device may immediately perform feedback for the ranging signal. In this way, the first terminal device may obtain a relative distance between the first terminal device and the second terminal device through measurement based on time of flight (time of flight, TOF) of the signal. For example, FIG. 5b is a diagram of another scenario of measuring a relative distance according to an embodiment of this application. TOF=Tprop=(Tround-Treply)/2. Then, the relative distance may be obtained based on a product of the TOF and a speed of light.

For another example, an example in which the first terminal device measures the relative location information is still used. FIG. 5c is a diagram of still another scenario of measuring relative location information according to an embodiment of this application. In this case, the relative location information may be represented as a relative direction. A receiver included in the first terminal device may receive, via an antenna, a signal sent by a transmitter included in the second terminal device, and may obtain, through measurement, an angle of arrival of the signal relative to a reference direction, so that a relative direction between the second terminal device and the first terminal device may be obtained based on the angle of arrival relative to the reference direction.

It should be noted that the first terminal device or the second terminal device may alternatively obtain the relative location information through measurement in another measurement manner. This is not limited in this application.

In this embodiment of this application, after obtaining the relative location information, the first network element may further subscribe to the relative location information between the first terminal device and the second terminal device. In this way, the first network element can obtain latest relative location information in time, to implement more accurate communication control on the first terminal device. For example, the first network element may subscribe to the relative location information from the AMF network element or the LMF network element. Optionally, the first network element may obtain the latest relative location information from the AMF network element or the LMF network element, and then perform communication control on the first terminal device based on the latest relative location information. For example, the AMF network element or the LMF network element may periodically measure the relative location information and report the relative location information to the first network element. Alternatively, for example, the first network element may indicate the AMF network element or the LMF network element to report the latest relative location information. In another optional manner, the first network element may alternatively indicate the AMF network element or the LMF network element to detect the relative location information, and the first network element is notified if it is detected that the relative location information changes from meeting a control condition to not meeting the control condition or if it is detected that the relative location information changes from not meeting a control condition to meeting the control condition. In this case, the first network element may directly change the communication control on the first terminal device based on the change of the relative location information.

**S403: The first network element performs the communication control on the first terminal device based on the control indication information and the relative location information.** The control indication information may further include the control condition. In this embodiment of this application, if it is determined that the relative location information meets the control condition included in the control indication information, the first terminal device is allowed to use the service managed by the first network element or the first terminal device is allowed to access the network served by the first network element. Conversely, if it is determined that the relative location information does not meet the control condition included in the control indication information, the first terminal device is not allowed to use the service managed by the first network element or the first terminal device is not allowed to access the network served by the first network element. Optionally, the first network element may send a response message to the first terminal device. The response message indicates that the service managed by the first network element is not allowed to be used or the first terminal device is not allowed to access the network served by the first network element. In addition, the response message may further carry location information of the second terminal device.

For example, the control condition includes but is not limited to at least one of the following conditions.
(1) The relative distance between the first terminal device and the second terminal device is within a preset distance range. Optionally, the preset distance range may be less than a preset distance threshold. For example, the control condition may be applicable to the scenario of the smart lock and the terminal device for smart unlocking described in the foregoing embodiment. In another optional manner, the preset distance range may alternatively be greater than or equal to a preset distance threshold. For example, the control condition may be applicable to the scenario of the dangerous industrial device and the another device described in the foregoing embodiment.
(2) The relative direction between the first terminal device and the second terminal device is within a preset direction range. Optionally, the preset direction range may be a preset direction angle related to use of a standard direction (for example, due north, due south, or due front) as a reference. For example, the control condition may be applicable to navigation of an unmanned vehicle or a robot, and the like.

For example, if the control condition includes the preset distance range and the preset direction range, the control condition may be, for example, that the second terminal device is not allowed to exist within a range of 90 degrees directly ahead of the first terminal device and within 1 meter from the first terminal device.

In addition, in addition to including the device identifier of the second terminal device and the control condition, the control indication information may further include but is not limited to at least one of the following information:
(1) Control manner: may indicate a manner in which the first network element performs the communication control on the first terminal device. Optionally, the control manner may be allowing or skipping allowing the first terminal device to use the service managed by the first network element (which may also be referred to as service control for short in this embodiment of this application). For example, establishment of a PDU session is allowed/not allowed. In another optional manner, the control manner may alternatively be allowing or skipping allowing the first terminal device to access the network served by the first network element (which may also be referred to as access control for short in this embodiment of this application). For example, access is allowed/not allowed.
(2) Secure release indication: may indicate the first network element to indicate the first terminal device to perform secure release when the first terminal device needs to release a session. In this way, the secure release indication is used, so that a problem such as service interruption caused by communication control can be avoided, thereby ensuring continuity of service processing performed by a terminal device.
(3) Location indication: may indicate the first network element to send the absolute location information of the first terminal device to the second terminal device after the first terminal device releases the session. For example, in some scenarios, if the relative location information between the first terminal device and the second terminal device does not meet the control condition and a session needs to be released, the first terminal device can not only learn in time that the control condition is not met, but also notify the second terminal device in time by using the location indication. For example, the first terminal device and the second terminal device may be respectively terminal devices of a child and a parent. When the relative location information between the first terminal device and the second terminal device does not meet the control condition within the preset distance threshold, to remind the parent in time, the first network element may send the absolute location information of the first terminal device to the second terminal device, so that the second terminal device accurately locates the first terminal device.

It may be understood that, on the basis of the location binding relationship between the second terminal device and the first terminal device, in addition to implementing the communication control on the first terminal device, the first network element may further send, to the second terminal device, a control result of the communication control performed on the first terminal device. In this way, the second terminal device may determine, based on the control result, whether adjustment needs to be performed. For example, the first terminal device and the second terminal device need to work together within a specific distance range. If the control result is that the first terminal device cannot work because the control condition is not met, the second terminal device may move to the first terminal device based on the control result.

To better understand the method provided in embodiments of this application, the following describes the steps in the embodiment shown in FIG. 4 in detail with reference to specific embodiments. For example, the first network element may be an SMF network element or an AMF network element. It should be noted that the first network element may alternatively be another network element/functional entity that can implement communication control on the first terminal device, a network element/functional entity in a future communication system, or the like. For ease of understanding, the SMF network element or the AMF network element is used as an example for description in the following embodiments.

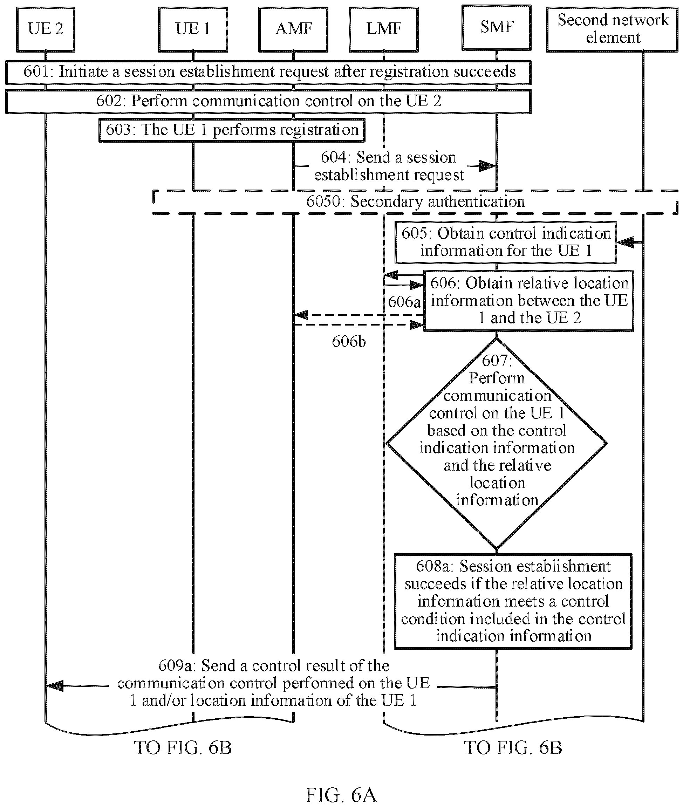

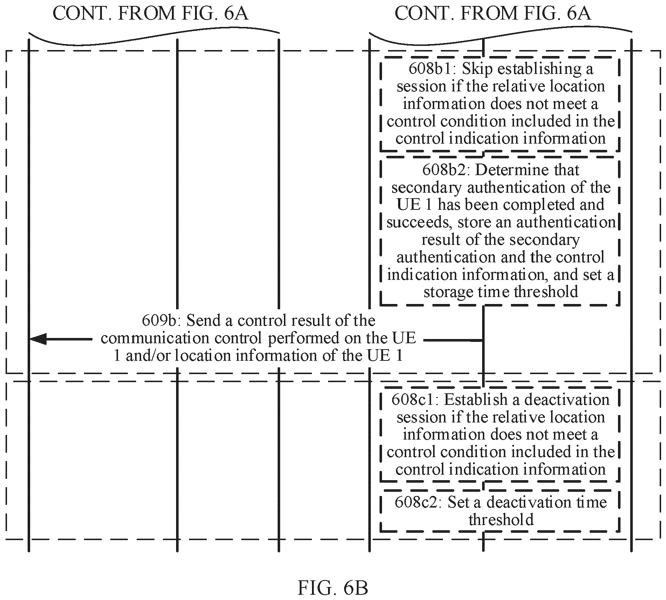

FIG. 6A and FIG. 6B are a flowchart of a communication control method according to an embodiment of this application. An example in which a first network element is an SMF network element is used. The method may include the following procedure.

S601: A second terminal device (which is referred to as a UE 2 for short in the following embodiments) initiates a session establishment request after successfully registering with an AMF network element. For example, the session may be a PDU session, another session that may be used by a UE for communication, or the like. In a possible scenario, the session establishment request may carry a PDU session type (session type) message. The PDU session type message may identify that the session is used to enable a binding function of the UE 2, so that when a UE 1 requests a network, the SMF network element may obtain a device identifier of the UE 2, and may implement communication control on the UE 1 based on relative location information. In another possible scenario, the PDU session type message may be prestored in context information of the UE 2 managed by a UDM network element, or may be prestored in an AF network element or a PCF network element. In this way, the AMF network element or the SMF network element may obtain the PDU session type message from the UDM network element, the AF network element, or the PCF network element, to determine to enable the binding function of the UE 2.

S602: The AMF network element may perform communication control on the UE 2. Alternatively, the AMF network element may send the session establishment request of the UE 2 to the SMF network element, and the SMF network element performs communication control on the UE 2, which is not shown in FIG. 6A and FIG. 6B.

In this embodiment of this application, in addition to performing the communication control on the UE based on the relative location information, a core network device may further implement the communication control on the UE based on absolute location information and a requirement of an actual scenario. For example, the UE may generally implement a plurality of types of service processing. A first type of service processing is in a scenario in which the UE 1 and the UE 2 have a location binding relationship. In this case, the core network device may perform the communication control on a first type of communication request of the UE 1 based on the relative location information. A second type of service processing is that the UE 2 implements service processing and does not have a location binding relationship with another UE. Therefore, the core network device may perform the communication control on a second type of communication request of the UE 2 based on the absolute location.

S603: A first terminal device (which is referred to as a UE 1 for short in the following embodiments) sends a session establishment request to the AMF network element (not shown in FIG. 6A and FIG. 6B). The UE 1 has registered with a network.

S604: The AMF network element sends the session establishment request of the UE 1 to the SMF network element.

Optionally, S6050: The UE 1 performs secondary authentication. For example, in a session establishment process, the UE 1 may synchronously perform the secondary authentication with the AF network element. If the secondary authentication has been completed and succeeds, an authentication result of the secondary authentication may be stored, for example, stored in the UDM network element or stored in the AF network element as context information of the UE 1. In this embodiment of this application, if control on the UE 1 in a subsequent processing procedure is rejecting establishment of the PDU session, a storage time threshold may be set for the secondary authentication result. In this way, if timing reaches the storage time threshold, the authentication result of the secondary authentication is cleared, to avoid long-time occupation of storage resources of a core network. Alternatively, if timing does not reach the storage time threshold, and request information sent by the UE 1 again is received, it is determined, based on the authentication result of the secondary authentication, that the secondary authentication of the UE 1 has been completed. In this case, the secondary authentication does not need to be performed again, so that time needed for the UE 1 to re-establish a session can be saved. In addition, if control on the UE 1 in the subsequent processing procedure is rejecting establishment of the PDU session, control indication information obtained in S605 may also be stored, so that efficiency of performing communication control on the UE 1 can be improved.

S605: The SMF network element obtains the control indication information for the UE 1 from a second network element. For example, the control indication information may include at least one of the following information: a device identifier of the UE 2, a control condition, a control manner, a secure release indication, and a location indication. For a function of each piece of information, refer to the content described in the foregoing embodiments. Details are not described herein again.

Optionally, the second network element shown in FIG. 6A and FIG. 6B may be the UDM network element. When obtaining subscription information of the UE 1 from the UDM network element, the SMF network element may obtain the control indication information from the subscription information of the UE 1. In another optional manner, the second network element shown in FIG. 6A and FIG. 6B may alternatively be the AF network element. When the SMF network element sends a secondary authentication request to the AF network element, the AF network element may include the control indication information for the UE 1 in an extensible authentication protocol (extensible authentication protocol, EAP) message, for example, an EAP success message. In still another optional manner, the second network element shown in FIG. 6A and FIG. 6B may alternatively be the PCF network element. When obtaining a control policy of the UE 1 from the PCF network element, the SMF network element may obtain the control indication information from a policy control message sent by the PCF network element.

S606: The SMF network element obtains relative location information between the UE 1 and the UE 2.

Optionally, S606a: The SMF network element may obtain the relative location information from an LMF network element. For example, the SMF network element sends, to the LMF network element, a request message for measuring the relative location information between the UE 1 and the UE 2. The LMF network element may directly or indirectly measure a relative location based on the request message of the SMF network element, and send a measurement result to the SMF network element. The direct measurement may be that the UE 1 or the UE 2 measures the relative location information. The indirect measurement may be that the LMF network element obtains absolute location information of the UE 1 and absolute location information of the UE 2, and obtains the relative location information based on the absolute location information of the UE 1 and the absolute location information of the UE 2. Alternatively, the LMF network element may report the absolute location information of the UE 1 and the absolute location information of the UE 2 to another network element such as the SMF network element or the AMF network element, and the another network element such as the SMF network element or the AMF network element obtains the relative location information through calculation. For example, the SMF network element may determine, based on a preconfigured local positioning policy or a positioning indication in the control indication information, a measurement manner for obtaining the relative location information between the UE 1 and the UE 2. For example, if the preconfigured local positioning policy is an indirect measurement manner, the SMF network element may determine to obtain the relative location information between the UE 1 and the UE 2 in the indirect measurement manner. In this case, the SMF network element may separately obtain the absolute location information of the UE 1 and the absolute location information of the UE 2. For another example, if the positioning indication in the control indication information is a direct measurement manner, the SMF network element may determine to obtain the relative location information between the UE 1 and the UE 2 in the direct measurement manner. In this case, the SMF network element may directly obtain the relative location information measured by the UE 1 or the UE 2. The relative location information measured by the UE 1 or the UE 2 may be measured by using a device-to-device direct connection technology (sidelink), may be measured in any one of the possible manners in FIG. 5a to FIG. 5c in the foregoing embodiment, or may be measured in another measurement manner. This is not limited in this application.

In addition, in a possible scenario, the UE 1 and the UE 2 may alternatively correspond to different AMF network elements. In this embodiment of this application, the first network element may further obtain, from the UDM network element, an identifier of an AMF network element corresponding to the UE 2, so that the first network element obtains the relative location information between the UE 1 and the UE 2 based on the AMF network element corresponding to the UE 2. Optionally, if the first network element obtains the control indication information from the UDM network element, when obtaining the control indication information, the first network element may further obtain the identifier of the AMF network element corresponding to the UE 2. The identifier of the AMF network element corresponding to the UE 2 may be carried in the control indication information, or may be different from the control indication information. In another optional manner, if the first network element obtains the control indication information from the AF network element, after obtaining the control indication information, the first network element may further obtain the identifier of the AMF network element corresponding to the UE 2 from the UDM network element.

Based on the foregoing scenario, the SMF network element may send positioning request information to a third network element (for example, the AMF network element or the LMF network element). The positioning request information may include: an identifier of the UE 1, an identifier of the UE 2, and indication information. The indication information indicates to request the relative location information. In addition, the positioning request information may further include the identifier of the AMF corresponding to the UE 2.

An example in which the third network element is the LMF network element is used. After receiving the positioning request information, the LMF network element may obtain, based on the positioning request information, absolute location information of the UE 1 by using an AMF network element 1 corresponding to the UE 1, and obtain absolute location information of the UE 2 by using an AMF network element 2 corresponding to the UE 2. Then, the LMF returns the absolute location information of the UE 1 and the absolute location information of the UE 2 to the SMF network element. Alternatively, the LMF network element may obtain the relative location information through calculation based on the absolute location information of the UE 1 and the absolute location information of the UE 2, and then return the relative location information to the SMF network element. In another optional manner, after the LMF network element receives the positioning request information, if the SMF network element indicates to use the direct measurement manner, the LMF network element may indicate, based on the positioning request information by using the AMF network element 1, the UE 1 to measure the relative location information with the UE 2, or may indicate, by using the AMF network element 2, the UE 2 to measure the relative location information with the UE 1.

In another optional manner, S606b: The SMF network element may alternatively obtain the relative location information from the AMF network element. An obtaining process of the AMF network element is similar to that of the LMF network element. Details are not described herein again. Alternatively, the AMF network element may obtain the relative location information from the LMF network element, and then send the relative location information to the SMF network element.

In addition, in a scenario in which the UE 1 and the UE 2 correspond to different AMF network elements, if the SMF network element obtains, from the UDM network element, an identifier of an AMF network element corresponding to the UE 2, the SMF network element may obtain the relative location information based on the AMF network element corresponding to the UE 2. Optionally, the SMF network element obtains absolute location information of the UE 1 by using an AMF network element 1 corresponding to the UE 1, and obtains absolute location information of the UE 2 by using an AMF network element 2 corresponding to the UE 2. Then, the SMF network element may obtain the relative location information through calculation based on the absolute location information of the UE 1 and the absolute location information of the UE 2. In another optional manner, the SMF network element may further indicate, by using the AMF network element 2, the UE 2 to measure the relative location information with the UE 1.

Based on the foregoing scenario, the SMF network element may send positioning request information to the AMF network element 1 corresponding to the UE 1. The positioning request information is used to request the AMF network element 1 to obtain the absolute location information of the UE 1 or the relative location information measured by the UE 1. In addition, the SMF network element may send positioning request information to the AMF network element 2 corresponding to the UE 2. The positioning request information is used to request the AMF network element 2 to obtain the absolute location information of the UE 2 or the relative location information measured by the UE 2.

S607: The SMF network element performs communication control on the UE 1 based on the control indication information and the relative location information.

In this embodiment of this application, that the SMF network element performs communication control on the UE 1 may include the following several possible processing results.

### Processing result 1

S608a: The SMF network element determines that session establishment succeeds if the relative location information meets the control condition included in the control indication information.

Optionally, S609a: The SMF network element may further send, to the UE 2, a control result of the communication control performed on the UE 1 and/or location information of the UE 1.

### Processing result 2

S608b1: The SMF network element determines not to establish a session if the relative location information does not meet the control condition included in the control indication information.

Optionally, S608b2: The SMF network element determines that secondary authentication of the UE 1 has been completed and succeeds, stores an authentication result of the secondary authentication and the control indication information, and sets a storage time threshold. In this way, if the session establishment request of the UE 1 is received again before timing reaches the storage time threshold, the SMF network element may determine, based on the stored authentication result of the secondary authentication, that the secondary authentication does not need to be performed again. The timing may start when the SMF network element determines that the UE 1 does not establish the session.

Optionally, S609b: The SMF network element may further send, to the UE 2, a control result of the communication control performed on the UE 1 and/or location information of the UE 1.

In another optional manner, the SMF network element may further send a response message to the UE 1, which is not shown in FIG. 6A and FIG. 6B. The response message indicates that the UE 1 is not allowed to establish the session. In addition, the response message may further include location information of the UE 2.

### Processing result 3

S608c1: The SMF network element establishes a deactivation session if the relative location information does not meet the control condition included in the control indication information. For example, in some scenarios, for example, in a scenario in which the UE 1 or the UE 2 frequently moves, to avoid frequent changes of control on the UE 1, the SMF network element may establish a session, but set the session to a deactivated state. In this way, the PDU session can retain a resource of a control plane but cannot use a resource of a user plane. After a relative location between the UE 1 and the UE 2 is updated, if the relative location may meet the control condition, only user plane activation needs to be performed on the session, thereby improving efficiency of re-establishing the session and reducing a waste of computing resources of the core network.

S608c2: The SMF network element sets a deactivation time threshold. For example, the deactivation time threshold may be preconfigured. Alternatively, the deactivation time threshold may be set for a possible future movement track of the UE 1 or the UE 2 determined based on expected mobility (expected mobility) information obtained by analyzing a movement track of the UE 1 or the UE 2 by a network data analytics function (network data analytics function, NWDAF) network element in the core network.

If timing reaches the activation time threshold, the first network element determines that the relative location information does not meet the control condition included in the control indication information, and releases the session. If timing does not reach the activation time threshold, the first network element determines that the relative location information meets the control condition included in the control indication information, and activates the session.

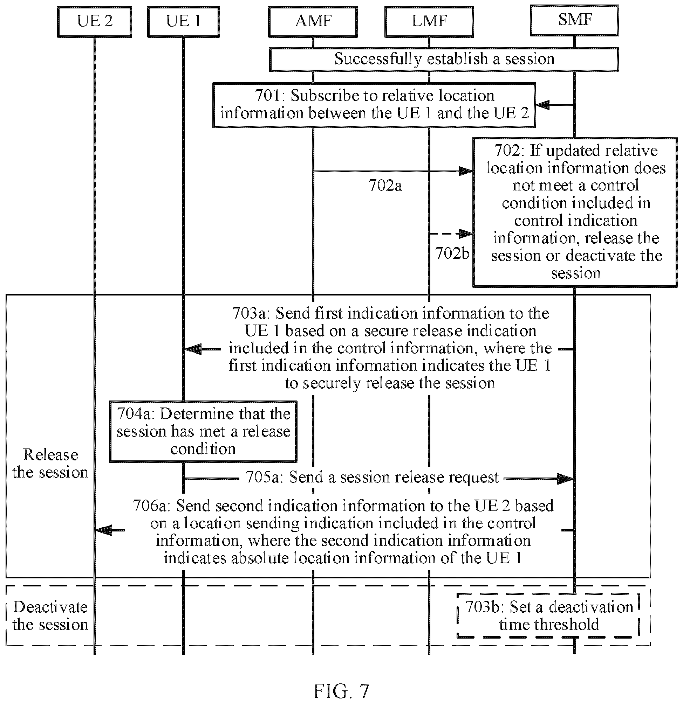

FIG. 7 is a flowchart of a communication control method according to an embodiment of this application. An example in which a first network element is an SMF network element is still used. If a UE 1 successfully establishes a session, the method may further include the following procedure.

S701: The SMF network element subscribes to relative location information between the UE 1 and a UE 2 from an AMF network element or an LMF network element. The AMF network element or the LMF network element may periodically measure the relative location information.

Optionally, S702a: The SMF network element obtains updated relative location information from the AMF network element. Optionally, the AMF network element may obtain the updated relative location information from the LMF network element, and then send the updated relative location information to the SMF network element.

In another optional manner, S702b: The SMF network element obtains updated relative location information from the LMF network element.

S702: If the updated relative location information does not meet a control condition included in the control indication information, release the session or deactivate the session.

If the session is to be released, the SMF network element continues to perform the following S703a to S706a.

S703a: The SMF network element sends first indication information to the UE 1 based on a secure release indication included in the control indication information, where the first indication information indicates the UE 1 to securely release the session. Optionally, the SMF network element may send the first indication information to the UE 1 via the AMF network element. The first indication information may carry a session identifier, and the session identifier indicates a session to be securely released by the UE 1.

Alternatively, if the control indication information does not include the secure release indication, the SMF network element may directly release the session of the UE 1.

S704a: The UE 1 determines that the session has met a release condition.

S705a: The UE 1 sends a session release request to the SMF network element.

S706a: The SMF network element sends second indication information to the second terminal device based on a location sending indication included in the control indication information, where the second indication information indicates absolute location information of the first terminal device and a control result.

If the session is to be deactivated, the SMF network element continues to perform the following S703b.

S703b: The SMF network element sets a deactivation time threshold. If timing reaches the activation time threshold, the first network element determines that the relative location information still does not meet the control condition included in the control indication information, and releases the session. If timing does not reach the activation time threshold, the first network element determines that the relative location information meets the control condition included in the control indication information again, and activates the session.

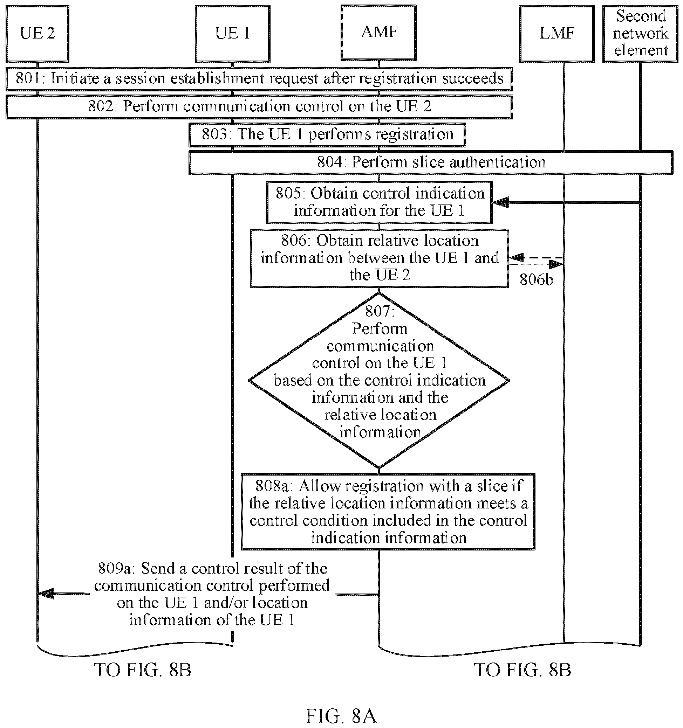

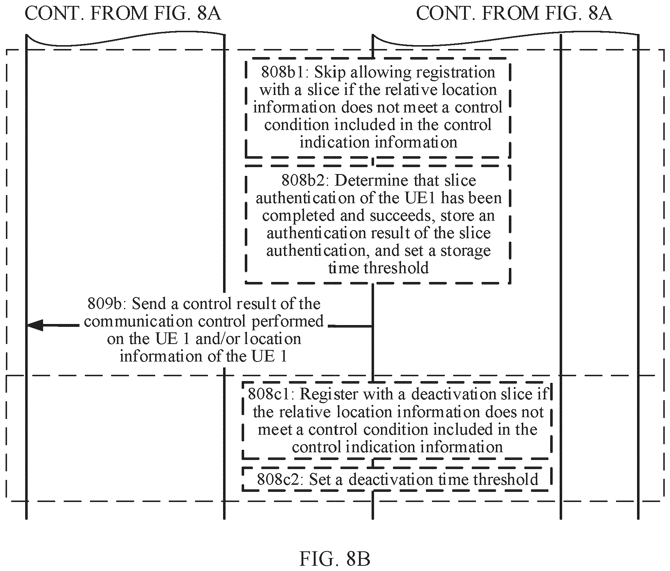

FIG. 8A and FIG. 8B are a flowchart of a communication control method according to an embodiment of this application. An example in which a first network element is an AMF network element is used. AUE 1 requests to access a network served by the AMF network element. A network served by the first network element may include one or more networks. If the network includes a plurality of networks, the network that is served by the AMF network element and that the UE 1 requests to access may be one of the networks. Alternatively, a network served by the first network element may include one or more slices. If the network includes a plurality of slices, the network that is served by the AMF network element and that the UE 1 requests to access may be specifically one of the slices that are served by the AMF network element and that the UE 1 requests to access. In the following embodiment, an example in which the UE 1 requests to access a slice is used. The method may include the following procedure.

S801: A UE 2 initiates a session establishment request after successfully registering with the AMF network element. In a possible scenario, the session establishment request may carry a PDU session type (session type) message. The PDU session type message may identify that the session is used to enable a binding function of the UE 2, so that when the UE 1 requests a network, an SMF network element may obtain a device identifier of the UE 2, and may implement communication control on the UE 1 based on relative location information. In another possible scenario, the PDU session type message may be prestored in context information of the UE 2 managed by a UDM network element, or may be prestored in an AF network element or a PCF network element. In this way, the AMF network element or the SMF network element may obtain the PDU session type message from the UDM network element, the AF network element, or the PCF network element, to determine to enable the binding function of the UE 2.

S802: The AMF network element performs communication control on the UE 2. Alternatively, the AMF network element may send the session establishment request of the UE 2 to the SMF network element, and the SMF network element performs communication control on the UE 2, which is not shown in FIG. 8A and FIG. 8B.

S803: The UE 1 initiates a registration request to the AMF network element.

S804: The UE 1 performs slice authentication. For example, in a process of registering with a slice, the UE 1 may synchronously perform slice authentication with the AF network element. If the slice authentication has been completed and succeeds, a result of the slice authentication may be stored, for example, stored in the UDM network element or stored in the AF network element as context information of the UE 1. In this embodiment of this application, if control on the UE 1 in a subsequent processing procedure is rejecting registration with the slice, a storage time threshold may be set for the result of the slice authentication. In this way, if timing reaches the storage time threshold, the authentication result of the slice authentication is cleared, to avoid long-time occupation of storage resources of a core network. Alternatively, if timing does not reach the storage time threshold, and request information sent by the UE 1 again is received, it is determined, based on the authentication result of the slice authentication, that the slice authentication of the UE 1 has been completed. In this case, the slice authentication does not need to be performed again, so that time needed for the UE 1 to request to register with the slice again can be saved. In addition, if control on the UE 1 in the subsequent processing procedure is rejecting registration with the slice, control indication information obtained in S805 may also be stored, so that efficiency of performing communication control on the UE 1 can be improved.

S805: The AMF network element obtains the control indication information for the UE 1. For example, the control indication information may include at least one of the following information: a device identifier of the UE 2, a control condition, a control manner, a secure release indication, and a location indication. For a function of each piece of information, refer to the content described in the foregoing embodiments. Details are not described herein again.

S806: The AMF network element obtains relative location information between the UE 1 and the UE 2. Optionally, the AMF network element may obtain the relative location information from the AMF network element. In another optional manner, S806b: The AMF network element may alternatively obtain the relative location information from an LMF network element. An obtaining method is similar to that in S606, and details are not described herein again.

For example, the AMF network element may determine, based on a preconfigured local positioning policy or a positioning indication in the control indication information, a measurement manner for obtaining the relative location information between the UE 1 and the UE 2. For example, if the preconfigured local positioning policy is an indirect measurement manner, the AMF network element may determine to obtain the relative location information between the UE 1 and the UE 2 in the indirect measurement manner. In this case, the AMF network element may separately obtain absolute location information of the UE 1 and absolute location information of the UE 2. For another example, if the positioning indication in the control indication information is a direct measurement manner, the AMF network element may determine to obtain the relative location information between the UE 1 and the UE 2 in the direct measurement manner. In this case, the AMF network element may directly obtain the relative location information measured by the UE 1 or the UE 2. The relative location information measured by the UE 1 or the UE 2 may be measured by using a device-to-device direct connection technology (sidelink), may be measured in any one of the possible manners in FIG. 5a to FIG. 5c in the foregoing embodiment, or may be measured in another measurement manner. This is not limited in this application.

In addition, in a possible scenario, the UE 1 and the UE 2 may alternatively correspond to different AMF network elements. In this embodiment of this application, the AMF network element may further obtain, from the UDM network element, an identifier of an AMF network element corresponding to the UE 2, so that the AMF network element obtains the relative location information between the UE 1 and the UE 2 based on the AMF network element corresponding to the UE 2. Optionally, if the AMF network element obtains the control indication information from the UDM network element, when obtaining the control indication information, the AMF network element may further obtain the identifier of the AMF network element corresponding to the UE 2. The identifier of the AMF network element corresponding to the UE 2 may be carried in the control indication information, or may be different from the control indication information. In another optional manner, if the AMF network element obtains the control indication information from the AF network element, after obtaining the control indication information, the AMF network element may further obtain the identifier of the AMF network element corresponding to the UE 2 from the UDM network element.

Based on the foregoing scenario, the AMF network element may send positioning request information to a third network element (for example, the LMF network element). The positioning request information may include: an identifier of the UE 1, an identifier of the UE 2, and indication information. The indication information indicates to request the relative location information. In addition, the positioning request information may further include the identifier of the AMF corresponding to the UE 2.

For example, after receiving the positioning request information, the LMF network element may obtain, based on the positioning request information, absolute location information of the UE 1 by using an AMF network element 1 corresponding to the UE 1, and obtain absolute location information of the UE 2 by using an AMF network element 2 corresponding to the UE 2. Then, the LMF returns the absolute location information of the UE 1 and the absolute location information of the UE 2 to the AMF network element 1. Alternatively, the LMF network element may obtain the relative location information through calculation based on the absolute location information of the UE 1 and the absolute location information of the UE 2, and then return the relative location information to the AMF network element 1. In another optional manner, after the LMF network element receives the positioning request information, if the SMF network element indicates to use the direct measurement manner, the LMF network element may indicate, based on the positioning request information by using the AMF network element 1, the UE 1 to measure the relative location information with the UE 2, or may indicate, by using the AMF network element 2, the UE 2 to measure the relative location information with the UE 1.

In addition, the AMF network element may alternatively directly request the UE 1 and the UE 2 to obtain the relative location information. Based on the scenario in which the UE 1 and the UE 2 correspond to different AMF network elements, the AMF network element may directly send positioning request information to the UE 1. The positioning request information is used to obtain the absolute location information of the UE 1 or the relative location information measured by the UE 1. In addition, the AMF network element may send positioning request information to the AMF network element 2 corresponding to the UE 2. The positioning request information is used to request the AMF network element 2 to obtain the absolute location information of the UE 2 or the relative location information measured by the UE 2.

S807: The AMF network element performs communication control on the UE 1 based on the control indication information and the relative location information.

In this embodiment of this application, that the AMF network element performs communication control on the UE 1 may include the following several possible processing results.

### Processing result 1

S808a: The AMF network element determines to allow registration with the slice if the relative location information meets the control condition included in the control indication information.

Optionally, S809a: The AMF network element may further send, to the UE 2, a control result of the communication control performed on the UE 1 and/or location information of the UE 1.

### Processing result 2

S808b1: The AMF network element determines to not allow registration with the slice if the relative location information does not meet the control condition included in the control indication information.

Optionally, S808b2: The AMF network element determines that the slice authentication of the UE 1 has been completed and succeeds, stores an authentication result of the slice authentication and the control indication information, and sets a storage time threshold. In this way, if the slice registration request of the UE 1 is received again before timing reaches the storage time threshold, based on the stored authentication result of the slice authentication, and the slice authentication does not need to be performed again. The timing may start when the AMF network element determines that the UE 1 is not allowed to register with the slice.

Optionally, S809b: The AMF network element may further send, to the UE 2, a control result of the communication control performed on the UE 1 and/or location information of the UE 1.

In another optional manner, the AMF network element may further send a response message to the UE 1, which is not shown in FIG. 8A and FIG. 8B. The response message indicates that the UE 1 is not allowed to register with the slice. In addition, the response message may further include location information of the UE 2.

### Processing result 3

S808c1: The AMF network element determines to register with a deactivation slice if the relative location information does not meet the control condition included in the control indication information. For example, in some scenarios, for example, in a scenario in which the UE 1 or the UE 2 frequently moves, to avoid frequent changes of control on the UE 1, the AMF network element may establish a slice, but set the slice to a deactivated state. In this way, the slice can retain a resource of a control plane but cannot use a resource of a user plane. After a relative location between the UE 1 and the UE 2 is updated, if the relative location may meet the control condition, only user plane activation needs to be performed on the slice, thereby improving efficiency of registering with the session and reducing a waste of computing resources of the core network.

S808c2: The AMF network element sets a deactivation time threshold. For example, the deactivation time threshold may be preconfigured. Alternatively, the deactivation time threshold may be set for a possible future movement track of the UE 1 or the UE 2 determined based on expected mobility (expected mobility) information obtained by analyzing a movement track of the UE 1 or the UE 2 by an NWDAF network element in the core network.

If timing reaches the activation time threshold, the first network element determines that the relative location information does not meet the control condition included in the control indication information, and releases the slice. If timing does not reach the activation time threshold, the first network element determines that the relative location information meets the control condition included in the control indication information, and activates the slice.

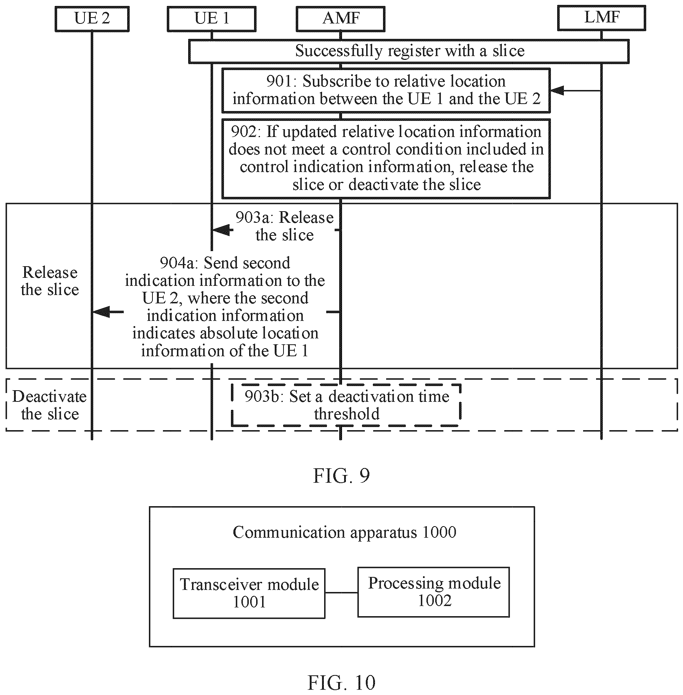

FIG. 9 is a flowchart of a communication control method according to an embodiment of this application. An example in which a first network element is an AMF network element is still used. If a UE 1 has registered with a network (or a slice) served by the first network element, the method may further include the following procedure.

S901: The AMF network element subscribes to relative location information between the UE 1 and a UE 2. Optionally, the AMF network element may perform monitoring. In another optional manner, the AMF network element may alternatively subscribe to an LMF network element. The AMF network element or the LMF network element may periodically measure the relative location information.

S902: If updated relative location information does not meet a control condition included in the control indication information, release the slice or deactivate the slice.

If the slice is to be released, the AMF network element continues to perform the following S903a and S904a.

S903a: The AMF network element releases the slice.

S904a: The AMF network element sends second indication information to the UE 2, where the second indication information indicates absolute location information of the UE 1.

If the slice is to be deactivated, the AMF network element continues to perform the following S903b.

S903b: The AMF network element sets a deactivation time threshold. If timing reaches the activation time threshold, the first network element determines that the relative location information still does not meet the control condition included in the control indication information, and releases the slice. If timing does not reach the activation time threshold, the first network element determines that the relative location information meets the control condition included in the control indication information again, and activates the slice.

For example, that the AMF network element deactivates the slice may be implemented as deactivating all sessions established by the UE 1 on the slice.

According to the method provided in this application, when the first terminal device requests to perform communication in the core network, the first network element may perform communication control on the first terminal device based on the relative location information with the second terminal device that has the location binding relationship with the first terminal device. Compared with a related technology in which a core network device performs communication control on a terminal device based on absolute location information of the terminal device, in the method provided in this application, communication control is performed on the terminal device based on relative location information between the terminal devices. This can improve precision and flexibility of performing communication control on the terminal device, meet more service requirements in a service scenario, and the like.

Based on a same technical concept as the method embodiment, embodiments of this application further provide a communication apparatus. FIG. 10 is a diagram of a structure of a communication apparatus according to an embodiment of this application. The communication apparatus 1000 includes: a transceiver module 1001 and a processing module 1002. The communication apparatus may be configured to implement a function of the first network element in any one of the foregoing method embodiments. The communication apparatus may be the first network element or a chip or a circuit included in the first network element.

The transceiver module 1001 is configured to obtain control indication information for a first terminal device from a second network element. The control indication information includes a device identifier of a second terminal device that has a location binding relationship with the first terminal device.

The transceiver module 1001 is further configured to obtain relative location information between the first terminal device and the second terminal device.

The processing module 1002 is configured to perform communication control on the first terminal device based on the control indication information and the relative location information.

In a possible design, before obtaining the control indication information for the first terminal device from the second network element, the transceiver module 1001 is further configured to receive request information sent by the first terminal device. The request information is used to request a service managed by the first network element or used to request to access a network served by the first network element. When being configured to perform communication control on the first terminal device based on the control indication information and the relative location information, the processing module 1002 is specifically configured to: if it is determined that the relative location information meets a control condition included in the control indication information, allow the first terminal device to use the service managed by the first network element or allow the first terminal device to access the network served by the first network element; or if it is determined that the relative location information does not meet a control condition included in the control indication information, skip allowing the first terminal device to use the service managed by the first network element or skip allowing the first terminal device to access the network served by the first network element.

In a possible design, the control condition includes but is not limited to at least one of the following conditions: A relative distance between the first terminal device and the second terminal device is within a preset distance range; and a relative direction between the first terminal device and the second terminal device is within a preset direction range.

In a possible design, the first network element is a session management network element. The allowing the first terminal device to use the service managed by the first network element includes: allowing the first terminal device to establish a session or activating a session. The skipping allowing the first terminal device to use the service managed by the first network element includes: skipping allowing the first terminal device to establish a session or deactivating a session.

In a possible design, before the first network element performs communication control on the first terminal device, the first terminal device has established a session. If the established session is in an activated state, the skipping allowing the first terminal device to use the service managed by the first network element includes: releasing the session or deactivating the session. If the established session is in a deactivated state, the allowing the first terminal device to use the service managed by the first network element includes: activating the session.

In a possible design, if the communication control performed by the first network element on the first terminal device is deactivating the session, the processing module 1002 is further configured to: set a deactivation time threshold; and if timing reaches the activation time threshold, determine, by the first network element, that the relative location information does not meet the control condition included in the control indication information, and release the session; or if timing does not reach the activation time threshold, determine, by the first network element, that the relative location information meets the control condition included in the control indication information, and activate the session.

In a possible design, if the releasing the session is securely releasing the session, the processing module 1002 is further configured to send first indication information to the first terminal device based on a secure release indication included in the control indication information. The first indication information indicates the first terminal device to securely release the session.

In a possible design, the processing module 1002 is further configured to: after the session is release, send, by the first network element, second indication information to the second terminal device based on a location sending indication included in the control indication information. The second indication information indicates absolute location information of the first terminal device.

In a possible design, the first network element is an access and mobility management network element. The allowing the first terminal device to access the network served by the first network element includes: allowing the first terminal device to register with the network served by the first network element, or activating registration of the first terminal device with the network served by the first network element. The skipping allowing the first terminal device to access the network served by the first network element includes: skipping allowing the first terminal device to register with the network served by the first network element, or deactivating registration of the first terminal device with the network served by the first network element.

In a possible design, before the first network element performs communication control on the first terminal device, the first terminal device has completed registration with the network served by the first network element. If the completed registration is in an activated state, the skipping allowing the first terminal device to access the network served by the first network element includes: deregistering the completed registration, or deactivating the completed registration. If the completed registration is in a deactivated state, the allowing the first terminal device to access the network served by the first network element includes: activating the completed registration.

In a possible design, the processing module 1002 is further configured to: before the first network element obtains the relative location information between the first terminal device and the second terminal device, subscribe, by the first network element, to the relative location information between the first terminal device and the second terminal device.

In a possible design, the second network element is a unified data management network element, an application function entity network element, or a policy control function network element.

In a possible design, the control indication information is included in subscription information of the first terminal device, an extensible authentication protocol message, or a policy control message.

In a possible design, when being configured to obtain the relative location information between the first terminal device and the second terminal device, the transceiver module 1001 is specifically configured to: obtain, by the first network element, first location information of the first terminal device and second location information of the second terminal device, and determine the relative location information based on the first location information and the second location information; or obtain, by the first network element, the relative location information measured by the first terminal device or the relative location information measured by the second terminal device.

In a possible design, when being configured to obtain the relative location information between the first terminal device and the second terminal device, the transceiver module 1001 is specifically configured to: obtain the relative location information from a third network element. The transceiver module 1001 is further configured to send positioning request information to the third network element. The positioning request information is used to request the relative location information between the first terminal device and the second terminal device.

In a possible design, the positioning request information includes an identifier of the first terminal device, an identifier of the second terminal device, and indication information, and the indication information indicates to request the relative location information.

In a possible design, if the first network element obtains an identifier of an access and mobility management network element corresponding to the second terminal device from a unified data management network element, the positioning request information includes the identifier of the access and mobility management network element corresponding to the second terminal device. The identifier of the access and mobility management network element corresponding to the second terminal device is used to obtain the relative location information.

In a possible design, if the first network element is the session management network element, the third network element is a location management function network element or an access and mobility management network element. If the first network element is the access and mobility management network element, the third network element is the location management function network element.

In a possible design, the transceiver module 1001 is further configured to send, to the second terminal device, a control result of the communication control performed on the first terminal device.

In a possible design, if the first terminal device is not allowed to use the service managed by the first network element or the first terminal device is not allowed to access the network served by the first network element, the processing module 1002 is further configured to: if timing reaches the storage time threshold, clear the authentication result of the secondary authentication; or if timing does not reach the storage time threshold, and request information sent by the first terminal device again is received, determine, based on the authentication result of the secondary authentication, that the secondary authentication of the first terminal device has been completed.

Based on the same technical concept as the method embodiment, refer to FIG. 10, the communication apparatus 1000 may be further configured to implement a function of the third network element related to any one of the foregoing method embodiments. The communication apparatus may be the third network element or a chip or a circuit included in the third network element.

The transceiver module 1001 is configured to receive positioning request information sent by a first network element. The positioning request information is used to request the relative location information between the first terminal device and the second terminal device. The processing module 1002 is configured to determine the relative location information between the first terminal device and the second terminal device. The transceiver module 1001 is further configured to send the relative location information to the first network element.

In a possible design, when being configured to determine the relative location information between the first terminal device and the second terminal device and send the relative location information to the first network element, the processing module 1002 is specifically configured to: obtain, via the transceiver module 1001, first location information of the first terminal device and second location information of the second terminal device, determine the relative location information based on the first location information and the second location information, and send, via the transceiver module 1001, the relative location information to the first network element; or obtain first location information of the first terminal device and second location information of the second terminal device, and send, via the transceiver module 1001, the first location information and the second location information to the first network element; or obtain the relative location information measured by the first terminal device or the relative location information measured by the second terminal device, and send, via the transceiver module 1001, the relative location information measured by the first terminal device or the relative location information measured by the second terminal device to the first network element.

In a possible design, the positioning request information includes an identifier of the first terminal device, an identifier of the second terminal device, and indication information, and the indication information indicates to request the relative location information.

In a possible design, the first network element corresponds to the first terminal device. The positioning request information includes an identifier of an access and mobility management network element corresponding to the second terminal device, and when being configured to determine the relative location information between the first terminal device and the second terminal device, the processing module 1002 is specifically configured to: obtain the first location information via an access and mobility management network element corresponding to the first terminal device, obtain the second location information based on the identifier of the access and mobility management network element corresponding to the second terminal device, and determine the relative location information based on the first location information and the second location information; or obtain, by the third network element via an access and mobility management network element corresponding to the first terminal device, the relative location information measured by the first terminal device; or obtain, based on the identifier of the access and mobility management network element corresponding to the second terminal device, the relative location information measured by the second terminal device.

Based on the same technical concept as the method embodiment, refer to FIG. 10, the communication apparatus 1000 may be further configured to implement a function of the UE related to any one of the foregoing method embodiments. The communication apparatus may be the UE or a chip or a circuit included in the UE.

The transceiver module 1001 is configured to report location information of the first terminal device to an access network device. The location information of the first terminal device is used by a core network device to determine relative location information between the first terminal device and a second terminal device, and control the first terminal device based on the relative location information. The first terminal device and the second terminal device have a location binding relationship.

In a possible design, before reporting the location information of the first terminal device to the access network device, the transceiver module 1001 is further configured to send request information to the access network device, where the request information is used to request to use a service managed by a network; and if the relative location information does not meet a condition for the first terminal device to use the service managed by the network, the transceiver module 1001 is further configured to receive response information from the access network device, where the response information indicates that the service managed by the network is not allowed to be used.

In a possible design, the response message includes location information of the second terminal device.

It should be noted that the processing module 1002 in the communication apparatus 1000 may be implemented by at least one processor or a processor-related circuit component, and the transceiver module 1001 may be implemented by at least one transceiver, a transceiver-related circuit component, or a communication interface. Operations and/or functions of the modules in the communication apparatus are separately used to implement corresponding procedures of the methods shown in FIG. 4 to FIG. 9. For brevity, details are not described herein again. Optionally, the communication apparatus may further include a storage module. The storage module may be configured to store data and/or instructions. The transceiver module 1001 and/or the processing module 1002 may read the data and/or the instructions in the storage module, to enable the communication apparatus to implement a corresponding method. For example, the storage module may be implemented via at least one memory.

The storage module, the processing module, and the transceiver module may exist separately, or all or some modules may be integrated. For example, the storage module is integrated with the processing module, or the processing module is integrated with the transceiver module.

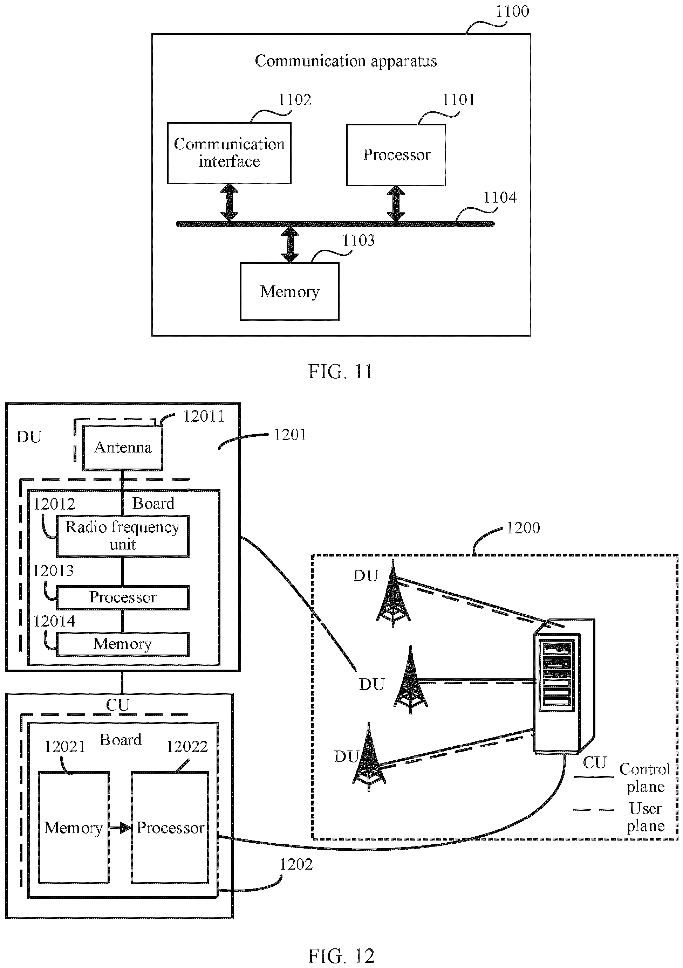

FIG. 11 is a diagram of another structure of a communication apparatus according to an embodiment of this application. The communication apparatus 1100 may be configured to implement a function corresponding to the UE in the foregoing method embodiment or configured to implement a function corresponding to the access network device in the foregoing method embodiment. The communication apparatus 1100 may be the UE, an apparatus that can support the UE in implementing a corresponding function in the foregoing method embodiment, or the like; or may be the access network device, an apparatus that can support the access network device in implementing a corresponding function in the foregoing method embodiment, or the like.

The communication apparatus 1100 may include a processor 1101, a communication interface 1102, and a memory 1103. The communication interface 1102 is configured to communicate with another device via a transmission medium. The communication interface 1102 may be a transceiver, or may be an interface circuit such as a transceiver circuit or a transceiver chip. The memory 1103 is configured to store program instructions and/or data, and the processor 1101 is configured to execute the program instructions stored in the memory 1103, to implement the method in the foregoing method embodiments. Optionally, the memory 1103 and the processor 1101 are coupled. The coupling is an indirect coupling or a communication connection between apparatuses, units, or modules, and may be in an electrical, mechanical, or another form, and is used for information exchange between the apparatuses, the units, or the modules.

In an embodiment, the communication interface 1102 may be specifically configured to perform an action of the foregoing transceiver module 1001, and the processor 1101 may be specifically configured to perform an action of the foregoing processing module 1002. Details are not described herein again in this application.

A specific connection medium between the communication interface 1102, the processor 1101, and the memory 1103 is not limited in this embodiment of this application. In this embodiment of this application, the memory 1103, the processor 1101, and the communication interface 1102 are connected via a bus 1104 in FIG. 11. The bus is represented by using a bold line in FIG. 11. A manner of a connection between other components is merely an example for description, and is not limited thereto. The bus may be classified into an address bus, a data bus, a control bus, and the like. For ease of representation, only one bold line is used to represent the bus in FIG. 11, but this does not mean that there is only one bus or only one type of bus.

FIG. 12 is a diagram of another structure of a communication apparatus according to an embodiment of this application. The communication apparatus 1200 may be configured to implement a function of the access network device in any one of the foregoing method embodiments. The communication apparatus 1200 is specifically an access network device, for example, a base station.

The communication apparatus 1200 includes one or more DUs 1201 and one or more CUs 1202. The DU 1201 may include at least one antenna 12011, at least one radio frequency unit 12012, at least one processor 12013, and at least one memory 12014. The DU 1201 is mainly configured to send and receive a radio frequency signal, perform conversion between a radio frequency signal and a baseband signal, and perform partial baseband processing.

The CU 1202 may include at least one processor 12022 and at least one memory 12021. The CU 1202 is mainly configured to perform baseband processing, control a base station, and the like The CU 1202 is a control center of the base station, and may also be referred to as a processing unit. For example, the CU 1202 may be configured to control the base station to perform the operations or steps corresponding to the first network element in the methods shown in FIG. 4 to FIG. 9.

The CU 1202 and the DU 1201 may communicate with each other through an interface. A control plane (control plane, CP) interface may be Fs-C, for example, F1-C, and a user plane (user plane, UP) interface may be Fs-U, for example, F1-U. The DU 1201 and the CU 1202 may be physically disposed together, or may be physically disposed separately, (that is, a distributed base station). This is not limited.

Specifically, baseband processing of the CU and the DU may be divided based on a protocol layer of a wireless network. For example, functions of a PDCP layer and a layer above the PDCP layer are set on the CU, and functions of protocol layers below the PDCP layer (for example, an RLC layer and a MAC layer) are set on the DU. For another example, the CU implements functions of an RRC layer and a PDCP layer, and the DU implements functions of an RLC layer, a MAC layer, and a physical (physical, PHY) layer.

Optionally, the communication apparatus 1200 may include one or more radio units (RUs), one or more DUs, and one or more CUs. The DU may include at least one processor 12013 and at least one memory 12014, the RU may include at least one antenna 12011 and at least one radio frequency unit 12012, and the CU may include at least one processor 12022 and at least one memory 12021.

In an embodiment, the CU 1202 may include one or more boards. A plurality of boards may jointly support a radio access network (for example, a 5G network) with a single access indication, or may separately support radio access networks (for example, an LTE network, a 5G network, or another network) with different access standards. The memory 12021 and the processor 12022 may serve one or more boards. In other words, a memory and a processor may be disposed on each board. Alternatively, a plurality of boards may share a same memory and a same processor. In addition, a necessary circuit may be further disposed on each board.

The DU 1201 may include one or more boards. A plurality of boards may jointly support a radio access network (for example, a 5G network) with a single access indication, or may separately support radio access networks (for example, an LTE network, a 5G network, or another network) with different access standards. The memory 12014 and the processor 12013 may serve one or more boards. In other words, a memory and a processor may be disposed on each board. Alternatively, a plurality of boards may share a same memory and a same processor. In addition, a necessary circuit may be further disposed on each board.

Embodiments of this application further provide a chip system, including: a processor. The processor is coupled to a memory, the memory is configured to store a program or instructions, and when the program or the instructions are executed by the processor, the chip system is enabled to implement the method corresponding to the UE or the access network device in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in this application.

For example, the chip system may be a field programmable gate array (field programmable gate array, FPGA), an application specific integrated circuit (application specific integrated circuit, ASIC), a system on a chip (system on a chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

Embodiments of this application further provide a computer-readable storage medium. The computer storage medium stores computer-readable instructions. When a computer reads and executes the computer-readable instructions, the computer is enabled to perform the method in any one of the foregoing method embodiments.

Embodiments of this application further provide a computer program product. When a computer reads and executes the computer program product, the computer is enabled to perform the method in any one of the foregoing method embodiments.

Embodiments of this application further provide a communication system, including: a first network element and a second network element that are configured to perform any possible method in the foregoing method embodiments.

It should be understood that the processor mentioned in embodiments of this application may be a CPU, or may be another general-purpose processor, a DSP, an ASIC, an FPGA or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory, an erasable programmable read-only memory, an electrically erasable programmable read-only memory, or a flash memory. The volatile memory may be a random access memory (random access memory, RAM), used as an external cache. For example but not for limitation, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory.

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that various numerical numbers in embodiments of this application are merely distinguished for ease of description, and sequence numbers of the foregoing processes or steps do not mean execution sequences. The execution sequences of the processes or steps should be determined based on functions and internal logic of the processes, and should not be construed as any limitation on implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, technical solutions of this application essentially, or the part contributing to the current technology, or some of the technical solutions may be implemented in a form of a software product. The computer software product is stored in a storage medium, and includes a plurality of instructions for instructing a computer device (which may be a personal computer, a server, an access network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

## Claims

1. A communication control method, comprising:
obtaining, by a first network element, control indication information for a first terminal device from a second network element, wherein the control indication information comprises a device identifier of a second terminal device that has a location binding relationship with the first terminal device;
obtaining, by the first network element, relative location information between the first terminal device and the second terminal device; and
performing, by the first network element, communication control on the first terminal device based on the control indication information and the relative location information.

2. The method according to claim 1, wherein before the obtaining, by a first network element, control indication information for a first terminal device from a second network element, the method further comprises: receiving, by the first network element, request information sent by the first terminal device, wherein the request information is used to request a service managed by the first network element or used to request to access a network served by the first network element; and
the performing, by the first network element, communication control on the first terminal device based on the control indication information and the relative location information comprises:
if it is determined that the relative location information meets a control condition comprised in the control indication information, allowing the first terminal device to use the service managed by the first network element or allowing the first terminal device to access the network served by the first network element; or
if it is determined that the relative location information does not meet a control condition comprised in the control indication information, skipping allowing the first terminal device to use the service managed by the first network element or skipping allowing the first terminal device to access the network served by the first network element.

3. The method according to claim 2, wherein the control condition comprises at least one of the following conditions:
a relative distance between the first terminal device and the second terminal device is within a preset distance range; and
a relative direction between the first terminal device and the second terminal device is within a preset direction range.

4. The method according to claim 2 or 3, wherein the first network element is a session management network element;
the allowing the first terminal device to use the service managed by the first network element comprises: allowing the first terminal device to establish a session or activating a session; and
the skipping allowing the first terminal device to use the service managed by the first network element comprises: skipping allowing the first terminal device to establish a session or deactivating a session.

5. The method according to claim 4, wherein before the first network element performs communication control on the first terminal device, the first terminal device has established a session; and
if the established session is in an activated state, the skipping allowing the first terminal device to use the service managed by the first network element comprises: releasing the session or deactivating the session; or
if the established session is in a deactivated state, the allowing the first terminal device to use the service managed by the first network element comprises: activating the session.

6. The method according to claim 4 or 5, wherein if the communication control performed by the first network element on the first terminal device is deactivating the session, the method further comprises:
setting a deactivation time threshold; and
if timing reaches the activation time threshold, determining, by the first network element, that the relative location information does not meet the control condition comprised in the control indication information, and releasing the session; or
if timing does not reach the activation time threshold, determining, by the first network element, that the relative location information meets the control condition comprised in the control indication information, and activating the session.

7. The method according to claim 5 or 6, wherein the method further comprises:
if the releasing the session is securely releasing the session, sending, by the first network element, first indication information to the first terminal device based on a secure release indication comprised in the control indication information, wherein the first indication information indicates the first terminal device to securely release the session.

8. The method according to any one of claims 5 to 7, wherein the method further comprises:
after the session is released, sending, by the first network element, second indication information to the second terminal device based on a location sending indication comprised in the control indication information, wherein the second indication information indicates absolute location information of the first terminal device.

9. The method according to claim 2 or 3, wherein the first network element is an access and mobility management network element; and
the allowing the first terminal device to access the network served by the first network element comprises: allowing the first terminal device to register with the network served by the first network element, or activating registration of the first terminal device with the network served by the first network element; or
the skipping allowing the first terminal device to access the network served by the first network element comprises: skipping allowing the first terminal device to register with the network served by the first network element, or deactivating registration of the first terminal device with the network served by the first network element.

10. The method according to claim 9, wherein before the first network element performs communication control on the first terminal device, the first terminal device has completed registration with the network served by the first network element; and
if the completed registration is in an activated state, the skipping allowing the first terminal device to access the network served by the first network element comprises: deregistering the completed registration, or deactivating the completed registration; or
if the completed registration is in a deactivated state, the allowing the first terminal device to access the network served by the first network element comprises: activating the completed registration.

11. The method according to any one of claims 1 to 10, wherein before the obtaining, by the first network element, relative location information between the first terminal device and the second terminal device, the method further comprises:
subscribing, by the first network element, to the relative location information between the first terminal device and the second terminal device.

12. The method according to any one of claims 1 to 11, wherein the second network element is a unified data management network element, an application function entity network element, or a policy control function network element.

13. The method according to any one of claims 1 to 11, wherein the control indication information is comprised in subscription information of the first terminal device, an extensible authentication protocol message, or a policy control message.

14. The method according to any one of claims 1 to 13, wherein the obtaining, by the first network element, relative location information between the first terminal device and the second terminal device comprises:
obtaining, by the first network element, first location information of the first terminal device and second location information of the second terminal device, and determining the relative location information based on the first location information and the second location information; or
obtaining, by the first network element, the relative location information measured by the first terminal device or the relative location information measured by the second terminal device.

15. The method according to any one of claims 1 to 13, wherein the obtaining, by the first network element, relative location information between the first terminal device and the second terminal device comprises:
obtaining, by the first network element, the relative location information from a third network element; and
the method further comprises:
sending, by the first network element, positioning request information to the third network element, wherein the positioning request information is used to request the relative location information between the first terminal device and the second terminal device.

16. The method according to claim 15, wherein the positioning request information comprises an identifier of the first terminal device, an identifier of the second terminal device, and indication information, and the indication information indicates to request the relative location information.

17. The method according to claim 15 or 16, wherein if the first network element obtains an identifier of an access and mobility management network element corresponding to the second terminal device from a unified data management network element, the positioning request information comprises the identifier of the access and mobility management network element corresponding to the second terminal device; and
the identifier of the access and mobility management network element corresponding to the second terminal device is used to obtain the relative location information.

18. The method according to any one of claims 15 to 17, wherein if the first network element is the session management network element, the third network element is a location management function network element or an access and mobility management network element; or
if the first network element is the access and mobility management network element, the third network element is a location management function network element.

19. The method according to any one of claims 1 to 18, wherein the method further comprises:
sending, by the first network element to the second terminal device, a control result of the communication control performed on the first terminal device.

20. The method according to any one of claims 2 to 19, wherein if the first terminal device is not allowed to use the service managed by the first network element or the first terminal device is not allowed to access the network served by the first network element, the method further comprises:
learning, by the first network element, that secondary authentication of the first terminal device has been completed and succeeds, storing an authentication result of the secondary authentication and the control indication information, and setting a storage time threshold; and
if timing reaches the storage time threshold, clearing the authentication result of the secondary authentication; or
if timing does not reach the storage time threshold, and request information sent by the first terminal device again is received, determining, based on the authentication result of the secondary authentication, that the secondary authentication of the first terminal device has been completed.

21. A communication control method, comprising:
receiving, by a third network element, positioning request information sent by a first network element, wherein the positioning request information is used to request relative location information between a first terminal device and a second terminal device;
determining, by the third network element, the relative location information between the first terminal device and the second terminal device; and
sending, by the third network element, the relative location information to the first network element.

22. The method according to claim 21, wherein the determining, by the third network element, the relative location information between the first terminal device and the second terminal device and sending the relative location information to the first network element comprises:
obtaining, by the third network element, first location information of the first terminal device and second location information of the second terminal device, determining the relative location information based on the first location information and the second location information, and sending the relative location information to the first network element; or
obtaining, by the third network element, the relative location information measured by the first terminal device or the relative location information measured by the second terminal device, and sending the relative location information measured by the first terminal device or the relative location information measured by the second terminal device to the first network element.

23. The method according to claim 21 or 22, wherein the positioning request information comprises an identifier of the first terminal device, an identifier of the second terminal device, and indication information, and the indication information indicates to request the relative location information.

24. The method according to claim 22 or 23, wherein the first network element corresponds to the first terminal device, the positioning request information comprises an identifier of an access and mobility management network element corresponding to the second terminal device, and the determining, by the third network element, the relative location information between the first terminal device and the second terminal device comprises:
obtaining, by the third network element, the first location information via an access and mobility management network element corresponding to the first terminal device, obtaining the second location information based on the identifier of the access and mobility management network element corresponding to the second terminal device, and determining the relative location information based on the first location information and the second location information; or
obtaining, by the third network element via an access and mobility management network element corresponding to the first terminal device, the relative location information measured by the first terminal device; or
obtaining, by the third network element based on the identifier of the access and mobility management network element corresponding to the second terminal device, the relative location information measured by the second terminal device.

25. A communication control method, comprising:
reporting, by a first terminal device, location information of the first terminal device to an access network device, wherein the location information of the first terminal device is used by a core network device to determine relative location information between the first terminal device and a second terminal device, and control the first terminal device based on the relative location information, wherein
the first terminal device and the second terminal device have a location binding relationship.

26. The method according to claim 25, wherein before the reporting, by a first terminal device, location information of the first terminal device to an access network device, the method further comprises:
sending, by the first terminal device, request information to the access network device, wherein the request information is used to request to use a service managed by a network; and
if the relative location information does not meet a condition for the first terminal device to use the service managed by the network, receiving response information from the access network device, wherein the response information indicates that the service managed by the network is not allowed to be used.

27. The method according to claim 26, wherein the response message comprises location information of the second terminal device.

28. A communication apparatus, comprising at least one processor, wherein the at least one processor is coupled to at least one memory; and
the at least one processor is configured to execute a computer program or instructions stored in the at least one memory, to enable the apparatus to perform the method according to any one of claims 1 to 20, enable the apparatus to perform the method according to any one of claims 21 to 24, or enable the apparatus to perform the method according to any one of claims 25 to 27.

29. A communication apparatus, comprising a processor and an interface circuit, wherein
the interface circuit is configured to exchange code instructions or data with the processor; and
the processor is configured to perform the method according to any one of claims 1 to 20, the processor is configured to perform the method according to any one of claims 21 to 24, or the processor is configured to perform the method according to any one of claims 25 to 27.

30. A computer-readable storage medium, configured to store instructions, wherein when the instructions are executed, the method according to any one of claims 1 to 20 is implemented, the method according to any one of claims 21 to 24 is implemented, or the method according to any one of claims 25 to 27 is implemented.

31. A communication system, comprising:
a first network element, configured to perform the method according to any one of claims 1 to 20; and
a second network element, configured to provide the control indication information for the first network element.

32. The communication system according to claim 31, further comprising:
a third network element, configured to perform the method according to any one of claims 21 to 24.

33. The communication system according to claim 31 or 32, further comprising:
a first terminal device, configured to perform the method according to any one of claims 25 to 27.

34. A communication system, comprising:
a first network element, configured to perform the method according to any one of claims 1 to 20; and
a third network element, configured to perform the method according to any one of claims 21 to 24.

35. A communication system, comprising:
a first network element, configured to perform the method according to any one of claims 1 to 20; and
a first terminal device, configured to perform the method according to any one of claims 25 to 27.

36. A communication control method, comprising:
providing, by a second network element, control indication information for a first terminal device for a first network element, wherein the control indication information comprises a device identifier of a second terminal device that has a location binding relationship with the first terminal device;
obtaining, by the first network element, the control indication information for the first terminal device;
obtaining, by the first network element, relative location information between the first terminal device and the second terminal device; and
performing, by the first network element, communication control on the first terminal device based on the control indication information and the relative location information.

37. The method according to claim 36, further comprising:
receiving, by a third network element, positioning request information sent by the first network element, wherein the positioning request information is used to request the relative location information between the first terminal device and the second terminal device;
determining, by the third network element, the relative location information between the first terminal device and the second terminal device; and
sending, by the third network element, the relative location information to the first network element.

38. The method according to claim 36 or 37, further comprising:
reporting, by the first terminal device, location information of the first terminal device.

39. A communication control method, comprising:
obtaining, by a first network element, control indication information for a first terminal device from a second network element, wherein the control indication information comprises a device identifier of a second terminal device that has a location binding relationship with the first terminal device;
sending, by the first network element, positioning request information to a third network element, wherein the positioning request information is used to request relative location information between the first terminal device and the second terminal device;
determining, by the third network element, the relative location information between the first terminal device and the second terminal device;
sending, by the third network element, the relative location information to the first network element;
obtaining, by the first network element, the relative location information; and
performing, by the first network element, communication control on the first terminal device based on the control indication information and the relative location information.

40. A communication control method, comprising:
reporting, by a first terminal device, location information of the first terminal device, wherein the location information of the first terminal device is used to determine relative location information between the first terminal device and a second terminal device;
obtaining, by a first network element, control indication information for the first terminal device from a second network element, wherein the control indication information comprises a device identifier of the second terminal device that has a location binding relationship with the first terminal device;
obtaining, by the first network element, the relative location information between the first terminal device and the second terminal device; and
performing, by the first network element, communication control on the first terminal device based on the control indication information and the relative location information.
